# EUROPEAN PATENT APPLICATION

(11) **EP 4 841 963 A1**
(43) Date of publication of application: **18.11.2026**
(21) Application number: 25808823.6
(22) Date of filing: 17.03.2025
(51) Int. Cl.: H04L 69/22

(54) **MESSAGE DATA PROCESSING METHOD AND APPARATUS, AND DEVICE, MEDIUM AND COMPUTER PROGRAM PRODUCT**

(30) Priority: 08.05.2024 CN 202410565897
(71) Applicant: Tencent Technology (Shenzhen) Company Limited, Shenzhen, Guangdong 518057 (CN)
(72) Inventor: TANG, Baojian, Shenzhen, Guangdong 518057 (CN)
(74) Representative: EP&C
(86) International application number: PCT/CN2025/082846
(87) International publication number: WO 2025/232348

(57) **Abstract**

A message data processing method, which is executed by means of a first device, and comprises: acquiring message data to be transmitted and local message header mapping information, wherein the message data comprises message header information and message content, and the message header mapping information comprises a mapping relationship between a preset message header field and preset index information (401); parsing the message header information in the message data, so as to obtain a message header field in the message data (402); querying the local message header mapping information for index information to which the message header field is mapped (403); when the index information to which the message header field is mapped is not found in the local message header mapping information, pulling remote message header mapping information from a server, so as to update the local message header mapping information on the basis of the remote message header mapping information (404); re-querying the updated local message header mapping information for the index information to which the message header field is mapped (405); and when the index information to which the message header field is mapped is found, packaging the index information to which the message header field is mapped and the message content, so as to obtain compressed message data, and transmitting the compressed message data (406).

## Description

### RELATED APPLICATION

This application claims priority to Chinese Patent Application No. 202410565897.6, entitled "DATA PACKET PROCESSING METHOD AND RELATED DEVICE" filed on May 8, 2024.

### FIELD OF THE TECHNOLOGY

This application relates to the field of computer technologies, particularly to the field of communications technologies, and specifically, to a data packet processing method and apparatus, a device, a medium, and a computer program product.

### BACKGROUND OF THE DISCLOSURE

A packet is a data unit exchanged and transmitted in a network. In addition to data information that needs to be transmitted, each packet usually further needs to identify description information such as a network address, a network protocol, and a packet length that is used during transmission of the packet. The description information is a packet header field. In different packets, the description information may generally be repeatedly used. In current related art, a packet header field is usually directly transmitted in a pure text form with other payload. As network service functions become increasingly complex, a volume of header traffic is increasing. In this way, there is a problem of network resource waste caused by data redundancy.

### SUMMARY

Embodiments of this application provide a data packet processing method and apparatus, a device, a medium, and a computer program product.

An embodiment of this application provides a data packet processing method, performed by a first device, and including:
acquiring a first data packet and local packet header mapping information, the first data packet comprising a first header and a first payload, and the local packet header mapping information comprising a mapping relationship between a preset header field and a preset index;
parsing the first header to obtain a first header field;
querying, from the local packet header mapping information, a first index mapped to the first header field;
obtaining a second data packet by replacing the first header field in the first header with the first index.

An embodiment of this application further provides a data packet processing method, performed by a second device, and including:
receiving a second data packet, the second data packet comprising a second header and a first payload;
parsing the second header to obtain a first index;
obtaining local packet header mapping information comprising a mapping relationship between a preset header field and a preset index;
querying, from the local packet header mapping information, a first header field mapped by the first index;
obtaining a first data packet by replacing the first index in the second header with first header field.

An embodiment of this application further provides a data packet processing method, performed by a server, and including:
acquiring header data, the header data comprising a plurality of header fields;
determining, from the header data and based on remote packet header mapping information, a first header field that is absent from the remote packet header mapping information and a second header field that is present in the remote packet header mapping information, the remote packet header mapping information comprising a mapping relationship between a preset header field and a preset index;
determining a number of occurrences of the second header field in the header data;
updating the remote packet header mapping information based on the number of occurrences of the second header field and first header field; and
transmitting the updated remote packet header mapping information to a first device and a second device.

Correspondingly, an embodiment of this application provides a data packet processing apparatus, applied to a first device, and including:
an acquisition unit, configured to acquire a first data packet and local packet header mapping information, the first data packet comprising a first header and a first payload, and the local packet header mapping information comprising a mapping relationship between a preset header field and a preset index;
a parsing unit, configured to parse the first header to obtain a first header field;
a first query unit, configured to query, from the local packet header mapping information, a first index mapped to the first header field;
a transmission unit, configured to: obtain a second data packet by replacing the first header field in the first header with the first index.

Correspondingly, an embodiment of this application further provides a data packet processing apparatus, applied to a second device, and including:
a receiving unit, configured to receive a second data packet, the second data packet comprising a second header and a first payload;
an extraction unit, configured to parse the second header to obtain a first index;
a third query unit, configured to obtain local packet header mapping information comprising a mapping relationship between a preset header field and a preset index; query, from the local packet header mapping information, a first header field mapped by the first index;
a storage unit, configured to: obtain a first data packet by replacing the first index in the second header with the first header field.

Correspondingly, an embodiment of this application further provides a data packet processing apparatus, applied to a server, and including:
a data acquisition unit, configured to acquire header data, the header data comprising a plurality of header fields;
a determination unit, configured to determine, from the header data and based on remote packet header mapping information, a first header field that is absent from the remote packet header mapping information and a second header field that is present in the remote packet header mapping information, the remote packet header mapping information comprising a mapping relationship between a preset header field and a preset index;
a statistics collection unit, configured to determine a number of occurrences of the second header field in the header data;
a first update unit, configured to update the remote packet header mapping information based on the number of occurrences of the second header field and first header field; and
a second update unit, configured to transmit the updated remote packet header mapping information to a first device and a second device.

In the embodiment of this application, the term "module" or "unit" refers to a computer program with a preset function or a part of the computer program and works, together with other related parts, to implement a preset target, and may be completely or partially implemented by using software, hardware (for example, a processing circuit or a memory) or a combination thereof. Similarly, one processor (or a plurality of processors or memories) may be configured to implement one or more modules or units. In addition, each module or unit may be a part of an overall module or unit including the module or unit function.

An embodiment of this application provides an electronic device, including a processor and a memory, the memory storing a plurality of instructions, and the processor loading the instructions, to perform the operations of the data packet processing method according to the embodiments of this application.

An embodiment of this application further provides a computer-readable storage medium, having a computer program stored therein, and the computer program, when executed by a processor, performing the operations of the data packet processing method according to the embodiments of this application.

An embodiment of this application further provides a computer program product, including a computer program or instructions, the computer program or instructions, when executed by a processor, implementing the operations of the data packet processing method according to the embodiments of this application.

Details of one or more embodiments of this application are provided in the drawings and description below. Other features, objectives, and advantages of this application become apparent from the description, the drawings, and the claims.

### BRIEF DESCRIPTION OF THE DRAWINGS

To describe the technical solutions in the embodiments of this application more clearly, the following briefly describes the drawings required for describing the embodiments. Apparently, the drawings in the following descriptions show merely embodiments of this application, and a person of ordinary skill in the art may still derive other drawings from these disclosed drawings without creative efforts.
FIG. 1 is a schematic diagram of a scenario of a data packet processing method according to an embodiment of this application.
FIG. 2 is an explanatory diagram of a data packet processing method according to an embodiment of this application.
FIG. 3 is another explanatory diagram of a data packet processing method according to an embodiment of this application.
FIG. 4 is a flowchart of a data packet processing method according to an embodiment of this application.
FIG. 5 is another explanatory diagram of a data packet processing method according to an embodiment of this application.
FIG. 6 is another flowchart of a data packet processing method according to an embodiment of this application.
FIG. 7 is another flowchart of a data packet processing method according to an embodiment of this application.
FIG. 8 is another flowchart of a data packet processing method according to an embodiment of this application.
FIG. 9 is another flowchart of a data packet processing method according to an embodiment of this application.
FIG. 10 is another flowchart of a data packet processing method according to an embodiment of this application.
FIG. 11 is another flowchart of a data packet processing method according to an embodiment of this application.
FIG. 12 is a schematic structural diagram of a data packet processing apparatus according to an embodiment of this application.
FIG. 13 is a schematic structural diagram of a data packet processing apparatus according to an embodiment of this application.
FIG. 14 is a schematic structural diagram of a data packet processing apparatus according to an embodiment of this application.
FIG. 15 is a schematic structural diagram of an electronic device according to an embodiment of this application.

### DESCRIPTION OF EMBODIMENTS

Technical solutions in embodiments of this application are clearly and completely described in the following with reference to the drawings in the embodiments of this application. Apparently, the described embodiments are merely some rather than all of the embodiments of this application. All other embodiments obtained by a person of ordinary skill in the art based on the embodiments of this application without creative efforts shall fall within the protection scope of this application. The term, involved in the following description, "some embodiments" describes subsets of all possible embodiments, but "some embodiments" may be the same subset or different subsets of all the possible embodiments and may be combined with each other without conflict.

Embodiments of this application provide a data packet processing method and apparatus, a device, a medium, and a computer program product. A related device may include a data packet processing apparatus, an electronic device, a computer-readable storage medium, and a computer program product.

The data packet processing method provided in some embodiments may be applied to various scenarios such as a cloud technology, artificial intelligence, intelligent transportation, and assisted driving. The cloud technology refers to a hosting technology that unifies a series of resources such as hardware, software, and networks within a wide area network or a local area network to implement calculation, storage, processing, and sharing of data.

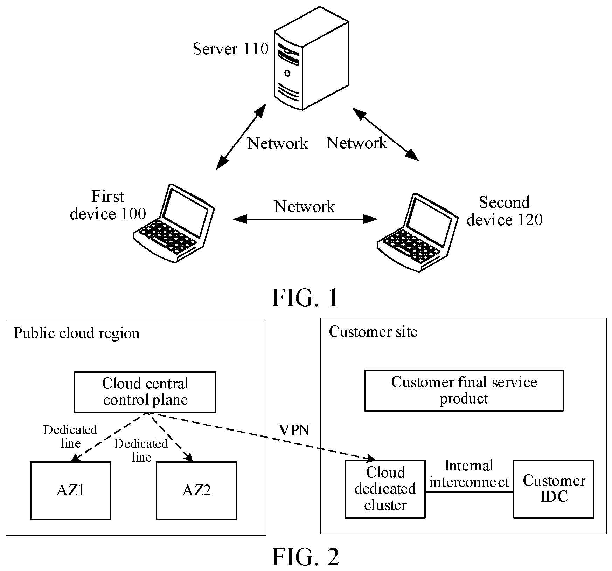

A data packet processing method provided in the embodiments of this application may be applied to an application environment shown in FIG. 1. A data packet processing system provided in this embodiment of this application includes a first device 100, a second device 120, and a server 110. The first device 100 is connected to the second device 120 through a network, and the first device 100 and the second device 120 are separately in communication connection to the server 110 through the network, for example, through a wired or wireless network connection. The server 110 may be configured to maintain and update a dictionary in a remote configuration center. The dictionary in the remote configuration center may be integrated on the server 110, or may be placed on another server.

In some embodiments, the first device 100 may be configured to: acquire a first data packet and local packet header mapping information, the first data packet comprising a first header and a first payload, and the local packet header mapping information comprising a mapping relationship between a preset header field and a preset index; parse the first header to obtain a first header field; query, from the local packet header mapping information, a first index mapped to the first header field; obtain a second data packet by replacing the first header field in the first header with the first index.. The first device 100 may be a terminal device, a client may further be set on the terminal device, and the client may be an application client, a browser client, or the like. The first device 100 may specifically include various desktop computers, notebook computers, smartphones, tablet computers, Internet of Things devices, portable wearable devices, vehicle terminals, aircraft, and network devices. The Internet of Things device may be a smart speaker, a smart television, a smart air conditioner, an intelligent in-vehicle device, or the like. The portable wearable device may be a smart watch, a smart band, a head-mounted device, and the like. The network device may be a router, a switch, a firewall, a load balancer, a network memory, a network adapter, or the like.

The second device 120 may be configured to: receive a second data packet, the second data packet comprising a second header and a first payload; parse the second header to obtain a first index; obtain local packet header mapping information comprising a mapping relationship between a preset header field and a preset index; query, from the local packet header mapping information, a first header field mapped by the first index; obtain a first data packet by replacing the first index in the second header with the first header field. The second device 120 may be a terminal device, the terminal device may further be provided with a client, and the client may be an application client, a browser client, or the like. The second device 120 may specifically include various desktop computers, notebook computers, smartphones, tablet computers, Internet of Things devices, portable wearable devices, vehicle terminals, aircraft, and network devices. The Internet of Things device may be a smart speaker, a smart television, a smart air conditioner, an intelligent in-vehicle device, or the like. The portable wearable device may be a smart watch, a smart band, a head-mounted device, and the like. The network device may be a router, a switch, a firewall, a load balancer, a network memory, a network adapter, or the like.

The server 110 may be configured to: acquire header data, the header data comprising a plurality of header fields; determine, from the header data and based on remote packet header mapping information, a first header field that is absent from the remote packet header mapping information and a second header field that is present in the remote packet header mapping information, the remote packet header mapping information comprising a mapping relationship between a preset header field and a preset index; determine a number of occurrences of the second header field in the header data; update the remote packet header mapping information based on the number of occurrences of the second header field and first header field; and transmit the updated remote packet header mapping information to a first device and a second device.. The server 110 may be an independent physical server, or a server cluster or a distributed system including a plurality of physical servers, or may alternatively be a cloud server that provides a cloud service, a cloud database, cloud computing, a cloud function, cloud storage, a network service, cloud communication, a middleware service, a domain name service, a security service, a content delivery network (CDN), and a basic cloud computing service such as big data and an artificial intelligence platform.

The data packet processing method provided in this application may be applied to transmission of mirrored traffic data, and specifically, may be applied to transmission of mirrored traffic data of cloud service-based control plane traffic data. In a real application scenario, when providing a service for a customer, to satisfy a data security requirement of the user, some cloud service providers usually need to deploy cloud service products of the cloud service providers in a local data center of the user. Because control plane traffic of the cloud service is independent of service traffic of the user (to reduce a risk of mutual interference) and is transmitted between a cloud service center and a local device of the user, to meet a requirement of the user for auditing the control plane traffic, mirroring processing needs to be performed on the control plane traffic to obtain mirrored traffic, and the mirrored traffic is transmitted to an electronic device configured to audit the control plane traffic. To improve transmission efficiency of the mirrored traffic, in this application, compression processing may be performed on a header field of data packet of the mirrored traffic, and the second data packet is transmitted.

As shown in a diagram of a distributed cloud service environment in FIG. 2, a deployment data center is independent of a public cloud, and is interconnected with an on-premises environment of a customer. Specifically, a plurality of available zones are provided in a public cloud region, for example, an availability zone 1 (AZ1) and an availability zone 2 (AZ2) in FIG. 2. In a distributed cloud scenario, a cloud dedicated cluster (CDC) deployed on a customer site shares a unified cloud central control plane with the public cloud region, and control plane traffic is transmitted between the CDC and a cloud central control plane backend of the public cloud region through a virtual private network (VPN). In addition, the CDC further performs mirroring processing on the control plane traffic to obtain mirrored traffic, and transmits the mirrored traffic to a user Internet data center (IDC) configured for auditing the control plane traffic, to audit the control plane traffic. In a traffic transmission process, header compression is implemented in a manner provided in this application, so as to save bandwidth and optimize transmission performance. After receiving the transmitted data packet, the user IDC performs decompression on a compressed header field in the received data packet, so as to recover a header field of the mirrored traffic.

CDC refers to a cloud dedicated cluster. CDC is a fully-managed infrastructure cloud product designed for a distributed cloud scenario. Resource facilities such as computing, storage, and network of a public cloud are deployed to a local data center of a customer in a unified software and hardware manner, to meet service requirements of the customer for data security and low delay. The CDC needs to be deployed in a local data center specified by a customer, thereby meeting a security requirement that data does not leave the local data center. Because the control plane traffic of the CDC is independent of the service traffic of the customer and the CDC shares the unified cloud central control plane with the public cloud region, the control plane traffic is transmitted between the cloud center and the data center of the customer. Therefore, mirroring processing needs to be performed on the control plane traffic to obtain the mirrored traffic and then the mirrored traffic is stored, to meet a requirement of the customer for local auditing of the control plane traffic.

IDC refers to an Internet data center and provides all-around services in aspects such as server hosting, leasing, and related value-added services for entities such as enterprises.

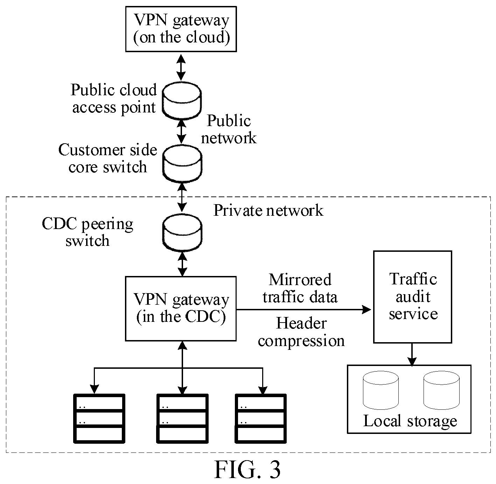

The control plane traffic is transmitted in a hardware environment shown in FIG. 3. Refer to FIG. 3. First, the control plane traffic is transmitted between a "VPN gateway (on the cloud)" and a "VPN gateway (in the CDC)". The traffic separately belongs to two ends of the VPN gateway and is configured for VPN communication. The "VPN gateway (on the cloud)" is deployed in a cloud central region, and accesses a public network through an access point (that is, a "public cloud access point") of the cloud central region. The other end of the public network is connected to the "customer side core switch", and is configured to communicate with a customer local IDC. A CDC cabinet is deployed inside the customer local IDC, and is connected through a "CDC peering switch". The other end of the "CDC peering switch" is connected to the "VPN gateway (in the CDC)", and is configured to transmit traffic from or to the "VPN gateway (on the cloud)". Hereto, interworking and interconnection between the cloud central region and a distributed cloud product CDC are implemented.

The mirrored traffic is transmitted between the "VPN gateway (in the CDC)" and the "traffic audit service", so that a security requirement for local storage of the management and control data can be met. Before the mirrored traffic is transmitted, the header field of the mirrored traffic is compressed, to save bandwidth and optimize transmission performance.

The following describes the data packet processing method in this application in detail. An order in which the following embodiments are described is not intended to limit priorities of the embodiments.

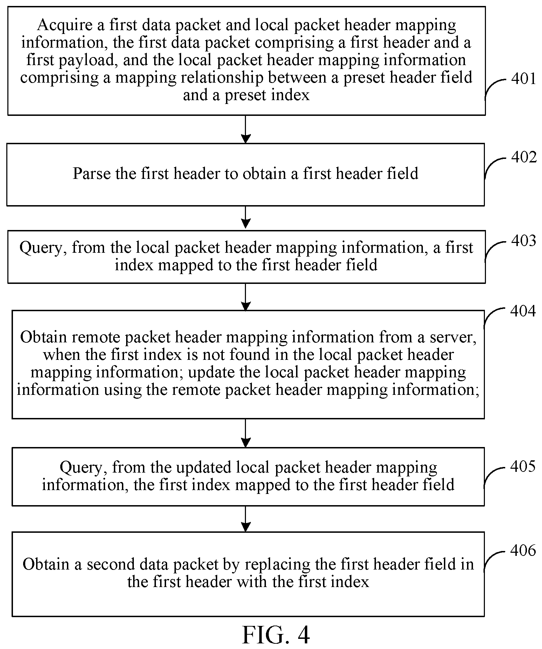

In some embodiments, as shown in FIG. 4, a data packet processing method is provided. An example in which the method is applied to the first device 100 in FIG. 1 is used for description. A specific process is as follows:
401: Acquire a first data packet and local packet header mapping information, the first data packet comprising a first header and a first payload, and the local packet header mapping information comprising a mapping relationship between a preset header field and a preset index.

In some embodiments, the first data packet is a to-be-transmitted data packet. The preset header field is also referred to be as a preset packet header field. The preset index is also referred to be as preset index information. The local packet header mapping information comprises a mapping relationship between at least one preset header field and at least one preset index. Each preset index is mapped to a respective preset header field.

A first device may acquire the data packet, process the data packet, and then transmit the data packet to a second device. The data packet may include the header and the payload. The header includes control information about a packet, such as a packet type, a source address, a target address, a protocol version, and a packet length. The payload is a packet body and includes specific data content, such as text, a picture, audio, and a video. The payload herein may be compressed payload, or may be uncompressed payload. This is not limited in this embodiment.

Specifically, the data packet may include service data that needs to be transmitted, and may be the control plane traffic data, the mirrored traffic, or the like in the foregoing embodiment. The first device may be the "VPN gateway (in the CDC)" device in the foregoing embodiment. For the control plane traffic data, the second device is the "VPN gateway (on the cloud)"; and for the mirrored traffic, the second device is a device configured to implement a "traffic audit service". The control plane traffic data may include information such as a status of traffic in a network, traffic priority setting, and security management and control. Through the control plane traffic data, performance, stability, and security of the network can be improved, and normal operation of a service can be ensured.

The first device locally stores a piece of packet header mapping information, i.e., local packet header mapping information. The packet header mapping information is specifically a dictionary, and is configured for querying for index information mapped by a packet header field. The dictionary may be a static table. Specifically, the packet header mapping information includes the mapping relationship between the preset packet header field and the preset index information. In some embodiments, the packet header field may be compressed by using the index information, to reduce a transmitted data volume.

The static table is a predefined set of header fields and index values mapped to the header fields. The header fields may include a request header and a response header, such as: method (method header), scheme (method header), authority (authorization request header), path (path header), and content-type (content type header).

Specifically, local packet header mapping information of the first device may include first packet header mapping information and second packet header mapping information. The first packet header mapping information may be specifically a common static dictionary, and the second packet header mapping information may be specifically a less-common static dictionary. The common static dictionary may be configured for storing a most common header name and a most common header key-value pair, a key in the header key-value pair is a header name, and a value in the header key-value pair is a header value. The less-common static dictionary may be configured for storing an enumeration of a header value, for example, an enumeration value of a uniform resource identifier (URI) header.

The first packet header mapping information is a part of local packet header mapping information of the first device. Specifically, the first packet header mapping information may be the common static dictionary, which is configured for storing a most common header name and a most common header key-value pair, or a relationship among a common field name, a field value, and index information, or a relationship between a common field name and index information, and is configured for querying for index information in a packet data processing process.

The second packet header mapping information is a part of local packet header mapping information of the first device, and may be specifically the less-common static dictionary. The second packet header mapping information is configured for storing an enumeration of a header value, for example, an enumeration value of a URI header, and assists in querying for index information in a data packet processing process.

The enumeration value of the URI header refers to a set of possible values defined in a specific context. These enumeration values are usually configured for representing different states or options in the URI header. Specific content of the enumeration value varies according to a specific URI header and an application scenario. For example, in some cases, the enumeration value of the URI header may include:
a. Success: indicating that an operation or request is successfully completed;
b. Fail: indicating that an error occurs in an operation or a request;
c. Being processed: indicating that a task is being processed currently; and
d. Cancel: indicating that an operation or a request is canceled.

402: Parse the first header to obtain a first header field.

In some embodiments, a header field is also referred to be as a packet header field. The first header is parsed to obtain the first packet header field. A packet header field may include a field name (that is, header name) and a field value (that is, header value). In a specific scenario, information exchanged by using a hypertext transfer protocol (HTTP) is referred to as an HTTP packet. In the HTTP, a packet header field exists in a form of a key-value pair, a key is the header name, and a value is the header value.

Specifically, names of some headers are relatively common, but values of the headers may be different according to a specific request or response. For example, a user-agent header is configured for specifying a browser type and version of a client, but a value of each client may be different. For another example, a header name of content-type is configured for specifying a content type, and a value of the header name may be text/html, application/json, or the like, where text/html represents a hypertext markup language (HTML) document, and application/json represents JSON data.

403: Query, from the local packet header mapping information, a first index mapped to the first header field. In other words, the step 403 query the local packet header mapping information for first index information mapped to the first packet header field.

In some embodiments, the local packet header mapping information is a relationship table of the preset packet header fields and the preset index information. Based on the packet header field, the relationship table is queried for the index information mapped to the first packet header field.

Specifically, the local packet header mapping information of the first device may include the first packet header mapping information and the second packet header mapping information. The first packet header mapping information may be specifically the common static dictionary, and the second packet header mapping information may be specifically the less-common static dictionary. The first packet header mapping information may be a relationship table of the common field name, the field value, and the index information, or may be a relationship table of the common field name and the index information. The second packet header mapping information may be a relationship table of the less-common field value and the index information.

In a specific scenario, a quantity of internal services in a traffic audit service is fixed, and HTTP "header information" may be enumerated. Therefore, a static dictionary (that is, the foregoing packet header mapping information) is configured for storing HTTP header information data. The static dictionary is mainly classified into a common static dictionary and a less-common static dictionary. The common static dictionary and the less-common static dictionary herein may be determined based on a frequency of using a packet header field in a preset time period.

The common static dictionary is configured for storing the most common header name and the most common header key-value pair. The common header key-value pair may be directly stored in the common static dictionary, and is indexed via an index. In addition, for a common header name and a less-common header value, the name may be stored in the common static dictionary, and the value may be stored in the less-common static dictionary. For example, a common header name, Host, may be stored in the common static dictionary, and a less-common value corresponding to Host may be indexed from the less-common static dictionary. Host is used by a client to specify a domain name and a port number of an HTTP server to be accessed.

A structure of the common static dictionary is shown in Table 1, and mainly includes index information, a header name (field name), and a header value (field value):

**Table 1**

| Index | Header Name | Header Value |
|---|---|---|
| 120 | method | GET |

where method is a method header, and GET indicates requesting data from a specified resource.

The less-common static dictionary may be configured for storing an enumeration of a header value, for example, an enumeration value of a uniform resource identifier (URI) header. A structure of the less-common static dictionary is shown in Table 2, and includes index (index information) and a header value (field value):

**Table 2**

| Index | Header Value |
|---|---|
| 1 | /sa _ report.cgi |

When only a common header name is stored in the common static dictionary, a less-common header value corresponding to the common header name may be stored in the less-common static dictionary. When the common static dictionary stores a common key-value pair, a key is the common header name, and a value is the common header value corresponding to the common header name.

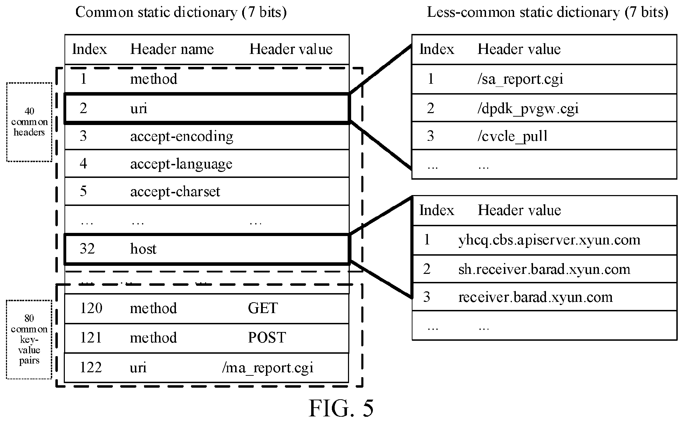

A relationship between the common static dictionary and the less-common static dictionary as a whole is shown in FIG. 5. The common static dictionary is shown on the left of FIG. 5, and the less-common static dictionary is shown on the right of FIG. 5. Capacitance space of each of the two static dictionaries is 7 bits. The common static dictionary may include 40 common headers (header names), 80 common key-value pairs (key-value pairs formed by a header name and a header value), and corresponding index information. The 40 common headers may include method, uri, access-encoding (an acceptable encoding manner), access-language (an acceptable language), access-character (an acceptable character set), host, and the like. The 80 common key-value pairs may include key-value pairs, such as method and GET, method and POST, uri and/ma _ report.cgi. The less-common static dictionary may be a mapping relationship set between a less-common header value corresponding to a common header in the common static dictionary, and index information. For example, the less-common static dictionary may include less-common header values /sa_report.cgi, /dpdk_pvgw.cgi, /cvcle_pull corresponding to a common header name uri (a uniform resource identifier), and the like. For another example, the less-common static dictionary may further include less-common header values yhcq.cbs.apiserver.xyun.com, sh.receiver.barad.xyun.com, receiver.barad.xyun.com, and the like corresponding to a common header name host.

406: obtain a second data packet by replacing the first header field in the first header with the first index. As such, the first data packet is compressed to second data packet, to save bandwidth and optimize transmission performance.

According to the data packet processing method, the first device uses local packet header mapping information to replace a first header field with a first index, thereby compressing the header of a data packet. This reduces the amount of data to be transmitted, saves bandwidth, and improves transmission performance. The local query further ensures high compression efficiency.

In some embodiments, before the step 406, when the first index is not found in the local packet header mapping information, the method performs step 404: obtain remote packet header mapping information from a server; update the local packet header mapping information using the remote packet header mapping information. As such, the updated local packet header mapping information is synchronized to the remote packet header mapping information. The remote packet header mapping information comprises a mapping relationship between at least one preset header field and at least one preset index. For example, remote packet header mapping information comprises a relationship table of preset header fields and preset indices.

In some embodiments, the first device pull remote packet header mapping information from a server when the index information mapped by the packet header field is not found in the local packet header mapping information, to update the local packet header mapping information based on the remote packet header mapping information.

A remote configuration center refers to a module that stores latest packet header mapping information (dictionary), and may actively push an updated dictionary configuration to the first device and the second device, or may wait for the first device and the second device to passively pull the latest packet header mapping information, so as to update local packet header mapping information of the first device and the second device. This helps ensure data consistency and maintainability between a transmitter and a receiver.

Specifically, the remote packet header mapping information may be pulled from a remote configuration center module in the server, where the remote packet header mapping information includes the mapping relationship between the preset packet header field and the preset index information. In a specific scenario, the remote configuration center module may store the latest packet header mapping information (dictionary), and may actively push the updated dictionary configuration to the first device, and the first device may passively pull the latest packet header mapping information from the remote configuration center module.

Specifically, the remote packet header mapping information may include first remote mapping information and second remote mapping information, the first remote mapping information may be a common static dictionary in the remote configuration center, and the second remote mapping information may be a less-common static dictionary in the remote configuration center. After the remote packet header mapping information is pulled, the first data packet header mapping information local to the first device may be updated based on the first remote mapping information, and the second data packet header mapping information local to the first device may be updated based on the second remote mapping information, so that a local dictionary configuration of the first device is synchronized with a dictionary configuration of the remote configuration center.

The common static dictionary refers to a dictionary configured for storing a most common header name and a most common header key-value pair, where a key in the header key-value pair is a header name, and a value is a header value. The common static dictionary may be further configured for storing a relationship among a common field name, a field value, and index information, or a relationship between a common field name and index information, may exist locally on the first device and the second device as well as in the remote configuration center, and is configured for querying for index information or supporting operations such as decompression in a data packet processing process.

In some embodiments, if the index information is found in the local packet header mapping information, an original packet header field may be directly replaced with the found index information mapped by the packet header field, and the index information mapped by the packet header field and the payload are packaged and transmitted.

405: Query, from the updated local packet header mapping information, the first index mapped to the first header field. In other words, at step 405, the first device query updated local packet header mapping information again for the first index mapped to the first header field.

Specifically, the updated local packet header mapping information may be queried for whether a field name or a field value of the packet header field exists, and corresponding index information is queried for if the field name or the field value of the packet header field exists.

When the index information mapped by the packet header field is found, the first device performs step 406: obtain a second data packet by replacing the first header field in the first header with the first index.

In some embodiments, the first device transmits the second data packet to a second device.

In some embodiments, the index information mapped to the packet header field may be used to replace the packet header field. In this way, only the index information needs to be transmitted instead of transmitting an entire field. A transmitted data volume is saved by transmitting an index instead of full byte data.

The payload may be compressed content, or may be uncompressed content. If the payload is not compressed, the payload may be compressed first, and then the compressed payload and the index information mapped to the packet header field are packaged and transmitted.

In some embodiments, the data packet processing method may further include: packaging, when the first index mapped to the first header field is not found in the updated local packet header mapping information, the first header field and the payload, to obtain packaged first data packet; and transmitting the packaged first data packet.

If index information corresponding to the packet header field is not found, the packet header field may be transparently transmitted, and the packet header field and the compressed payload are directly packaged and transmitted, so that the second device receives the packaged data packet, and then parses the packaged data packet to obtain the packet header field for storage. In other words, if index information corresponding to the packet header field is not found, the original data packet is transmitted to the second device. Finally, the remote configuration center performs statistical analysis on the packet header field stored in the second device, updates the remote packet header mapping information according to a statistical analysis result, and actively pushes updated remote packet header mapping information to the first device and the second device, to update the local packet header mapping information of the first device and the second device.

In some embodiments, the to-be-transmitted data packet(e.g., the first data packet) and the local packet header mapping information are acquired, the data packet including the header and the payload, and the packet header mapping information including the mapping relationship between at least one preset packet header field and at least one preset index; the header in the data packet is parsed, to obtain the packet header field of the data packet; the local packet header mapping information is queried for the index information(e.g., the first index) mapped to the packet header field; the remote packet header mapping information is pulled from the server when the index information mapped to the packet header field is not found in the local packet header mapping information, to update the local packet header mapping information based on the remote packet header mapping information; the updated local packet header mapping information is queried again for the index information mapped to the packet header field; and a second data packet is obtained by replacing the first header field in the first header with the first index, when the index information mapped to the packet header field is found.

In this application, the packet header field can be compressed by using the corresponding index information defined in the packet header mapping information, to reduce the transmitted data volume. In addition, the transmitter locally has its own packet header mapping information. During compression, the transmitter first queries for the index information locally, so as to improve data compression efficiency. When the transmitter cannot find corresponding index information locally, the local packet header mapping information of the first device may be updated by pulling the remote packet header mapping information stored in the server, to query for corresponding index information again, so as to compress the packet header field. The manner of deploying the configuration update center of the packet header mapping information in the server helps better maintain the packet header mapping information of the transmitter.

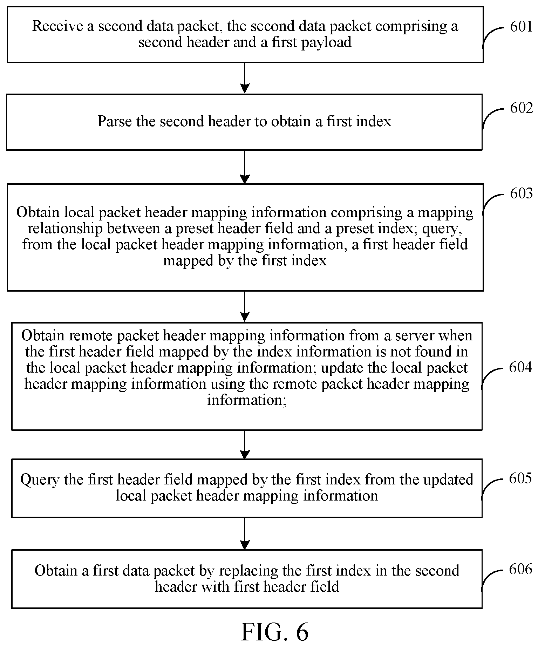

In some embodiments, as shown in FIG. 6, a data packet processing method is provided. An example in which the method is applied to the second device 120 in FIG. 1 is used for description. A specific process is as follows:
601: Receive a second data packet, the second data packet comprising a second header and a first payload. In some embodiments, the second data packet is also referred to be as a compressed data packet.

The second device receives the compressed data packet, and the header of the compressed data packet may be compressed or uncompressed. The payload in the compressed data packet is usually compressed. The header includes control information about a packet, such as a packet type, a source address, a target address, a protocol version, and a packet length. The payload is a packet body and includes specific data content, such as text, a picture, audio, and a video.

Specifically, if a first device does not find index information corresponding to a packet header field, the first device may directly transparently transmit the packet header field to the second device. In this case, the header is uncompressed. If the first device finds the index information corresponding to the packet header field, the first device may replace the packet header field with the index information and transmit the index information to the second device. In this case, the header received by the second device is the index information, that is, the compressed header (also referred to as a second header in the context of the second data packet).

602: parse the second header to obtain a first index.

In some embodiments, step 602 extract the second header from the second data packet, and detect the second header.

The second header may be extracted from the second data packet according to a protocol format, and then whether the header is compressed is detected. If it is detected that the second header includes the index information (for example, the first index), it indicates that the second header is compressed, and if it is detected that the second header is a full packet header field, it indicates that the second header is uncompressed.

603: obtain local packet header mapping information comprising a mapping relationship between a preset header field and a preset index; query, from the local packet header mapping information, a first header field mapped by the first index.

In some embodiments, when it is detected that the second header includes the first index, the second device perform the step 603.

606: obtain a first data packet by replacing the first index in the second header with the first header field. As such, the second data packet is decompressed into the first data packet by replacing the first index in the second header with first header field.

According to the data packet processing method, the second device decompresses a received second data packet by using the local packet header mapping information to replace a first index with the corresponding first header field. This enables lossless recovery of the original packet header at the receiving end, while maintaining low decompression latency.

In some embodiments, the local packet header mapping information of the second device may include the mapping relationship between the preset header field and the preset index. The preset header field may include a field name (that is, header name) and a field value (that is, header value).

Specifically, the local packet header mapping information of the second device may include third packet header mapping information and fourth packet header mapping information. The third packet header mapping information may be specifically a common static dictionary, and the fourth packet header mapping information may be specifically a less-common static dictionary.

The third packet header mapping information is a part of local packet header mapping information of the second device, may be specifically the common static dictionary, is configured for storing a most common header name and a most common header key-value pair, or a relationship among a common field name, a field value, and index information, or a relationship between a common field name and index information, and is configured for querying for a packet header field in a process of decompressing data packet.

The fourth packet header mapping information is a part of local packet header mapping information of the second device. The fourth packet header mapping information may be specifically the less-common static dictionary, which is configured for storing an enumeration of a header value, for example, an enumeration value of a URI header, and assists in querying for a packet header field in a process of decompressing data packet.

The common static dictionary may be configured for storing a most common header name and a most common header key-value pair, a key in the header key-value pair is a header name, and a value in the header key-value pair is a header value. The common header key-value pair may be directly stored in the common static dictionary, and is indexed via an index. In addition, for a common header name and a less-common header value, the name may be stored in the common static dictionary, and the value may be stored in the less-common static dictionary. For example, a common header name Host may be stored in the common static dictionary, and a less-common value corresponding to Host may be indexed from the less-common static dictionary.

The less-common static dictionary may be configured for storing an enumeration of a header value, for example, an enumeration value of a uniform resource identifier (URI) header.

For example, the third packet header mapping information may be a relationship table of the common field name, the field value, and the index information, or may be a relationship table of the common field name and the index information. The fourth packet header mapping information may be a relationship table of the less-common field value and the index information.

In some embodiments, when the first header field mapped by the index information is not found in the local packet header mapping information, the method performs step 604: obtain remote packet header mapping information from a server; update the local packet header mapping information using the remote packet header mapping information.

In some embodiments, the second device pull remote packet header mapping information from a server, to update the local packet header mapping information based on the remote packet header mapping information. As such, the updated local packet header mapping information is synchronized to the remote packet header mapping information.

Specifically, the remote packet header mapping information is pulled from a remote configuration center module in the server. The remote packet header mapping information includes a mapping relationship between the preset header field and the preset index. In a specific scenario, the remote configuration center module may store the latest packet header mapping information (dictionary), and may actively push an updated dictionary configuration to the second device, and the second device may passively pull the latest packet header mapping information from the remote configuration center module.

Specifically, the remote packet header mapping information may include first remote mapping information and second remote mapping information, the first remote mapping information may be a common static dictionary in the remote configuration center, and the second remote mapping information may be a less-common static dictionary in the remote configuration center. After the remote packet header mapping information is pulled, the third packet header mapping information local to the second device may be updated based on the first remote mapping information, and the fourth packet header mapping information local to the second device may be updated based on the second remote mapping information, so that a local dictionary configuration of the second device is synchronized with a dictionary configuration of the remote configuration center.

In some embodiments, if the packet header field mapped by the index information is found from the local packet header mapping information, the found packet header field may be directly combined with payload in the compressed data packet for storage.

605: query the first header field mapped by the first index from the updated local packet header mapping information.

In other words, the second device queries updated local packet header mapping information again for the packet header field mapped by the index information.

The packet header field herein may include a field name (header name) and/or a field value (header value).

The method performs step 606 when a first header field mapped by the first index is found.

The first payload in the second data packet may be decompressed, and then the decompressed first payload and the first header field are stored.

Optionally, in some embodiments, the data packet processing method may further include:
storing, when it is detected that the second header is an uncompressed packet header field, the uncompressed packet header field and the first payload in the second data packet.

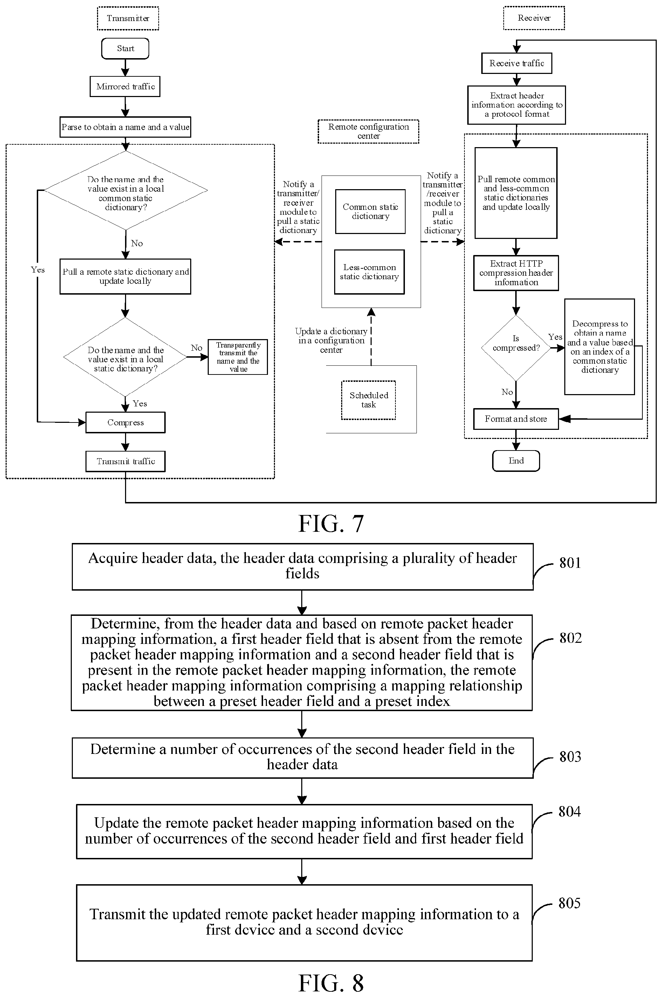

In a specific scenario, FIG. 7 is a flowchart of updating dictionaries of a transmitter and a receiver by using a remote configuration center, which is specifically described as follows:

A common static dictionary is classified into a local static dictionary and a remote static dictionary. Similarly, a less-common static dictionary is classified into a local less-common static dictionary and a remote less-common static dictionary. Content of the local dictionary (the transmitter and the receiver) needs to be consistent with content of the remote dictionary.

The local common static dictionary is configured for indexing a dictionary locally. For example, the transmitter may find an index according to a (Header Name, Header Value) tuple, and the receiver may find a (Header Name, Header Value) tuple according to the index. The local less-common static dictionary operates in a similar manner.

The remote common static dictionary is stored in the remote configuration center, and is configured for actively pushing dictionary data to the transmitter and the receiver, or waiting for the transmitter and the receiver to passively pull dictionary data. When the transmitter or the receiver does not find the index locally, the remote static dictionary may be pulled to check whether the index exists in the remote common static dictionary, and if the index exists, the local dictionary is updated. The remote less-common static dictionary operates in a similar manner.

In addition, there is a scheduled task which is specifically configured for maintaining and updating dictionary information of the remote configuration center. The remote configuration center actively pushes information when the dictionary information changes, and triggers an update of the dictionary information of the transmitter and the receiver.

Specifically, referring to FIG. 7, specific operations of data processing of the transmitter are as follows:
1) First, receiving, by the transmitter, mirrored traffic;
2) parsing HTTP header information of the mirrored traffic to obtain a header name and a header value;
3) querying, according to the header name/value (where the header name/value is a key, and the index is a value), the local common/less-common static dictionary of the transmitter for the index, to determine whether a corresponding index exists in the local common/less-common static dictionary;
4) pulling, if the corresponding index does not exist in the local common/less-common static dictionary, the remote common/less-common static dictionary from a remote configuration center;
5) updating the local remote common/less-common static dictionary based on the pulled remote common/less-common static dictionary, and determining whether the header name/value exists in updated local common/less-common static dictionary again;
6) performing compression by using the corresponding index if the header name/value exists in the updated local common/less-common static dictionary; or transparently transmitting the header name/value if the header name/value does not exist in the updated local common/less-common static dictionary; and
7) starting transmitting mirrored traffic after compression of other data in the packet is completed.

Similarly, referring to FIG. 7, specific operations of data processing of the receiver are as follows:
1) First, receiving, by the receiver, compressed mirrored traffic;
2) extracting HTTP header information according to a protocol format;
3) pulling a common/less-common static dictionary from the remote configuration center on demand and updating locally;
4) acquiring a single piece of header information in the HTTP;
5) determining, according to the header information, whether the header information is compressed;
6) performing, if the header information is compressed, decompression according to an index in the common/less-common static dictionary to obtain header name/value; or
7) directly storing a current header name/value obtained through parsing if the header information is not compressed; and
8) combining other information in the packet, and performing formatting and storage.

In addition to the transmitter and the receiver, there is the remote configuration center and a background scheduled task. The background scheduled task may further perform statistical analysis on header name/value by screening the formatted and stored data of the second device, to screen a common/less-common static dictionary entry that can be added/deleted, so as to deal with a real-time change of traffic, and achieve a balance between storage space and compression efficiency.

In this application, HTTP header compression configuration data (that is, the foregoing dictionary data) may be stored in the remote configuration center, so that data consistency is sufficiently ensured. The remote configuration center is a unique data source and both the transmitter and the receiver pull data from the same source. Therefore, the data is inevitably consistent. Specifically, in this application, uniform management and centralized configuration are performed on dictionary data of a packet header by using the remote configuration center, thereby enabling high maintainability. In a distributed cloud scenario, in this application, mirrored layer-3 traffic in a customer local IDC is received and HTTP header compression is utilized to save bandwidth traffic. During compression, a unified remote configuration center is utilized to store the HTTP header compression configuration data, and the transmitter and the receiver only need to acquire corresponding configuration data from the remote configuration center, thereby facilitating maintenance of data of the transmitter and data of the receiver. If there is no unified configuration and maintenance center, data inconsistency easily occurs, and maintainability of the data is very poor. For example, configuration data is dispersed at the transmitter and the receiver. If the transmitter updates local dictionary data of the transmitter (for example, adding and deleting entries in the dictionary), and the receiver does not correspondingly update the local dictionary data of the receiver, data of the transmitter and data of the receiver are inconsistent. As a result, the receiver cannot perform decoding according to an index. When compression/decompression failure occurs, a troubleshooting path is lengthy and a troubleshooting process is complex, leading to difficulties in system maintenance. The unified remote configuration center provided in this application is clearly implemented, facilitates easy data maintenance, offers superior maintainability, and can ensure consistency of configuration data more effectively.

In some embodiments, the second data packet may be received. The second data packet includes the second header and the first payload; the second header is extracted from the second data packet, and the second header is detected; when it is detected that the second header includes the first index, the local packet header mapping information is queried for the packet header field mapped by the first index, the packet header mapping information including the mapping relationship between the preset header field and the preset index; the remote packet header mapping information is pulled from the server when the first header field mapped by the first index is not found in the local packet header mapping information, to update the local packet header mapping information based on the remote packet header mapping information; and the updated local packet header mapping information is queried again for the first header field mapped by the first index; and the first header field and the first payload are stored when the first header field mapped by the first index is found.

In this application, the header may be compressed by using the index, to reduce a transmitted data volume. In addition, in a process of decompressing the data packet, the data packet may be first decompressed by using local packet header mapping information of the receiver, to improve decompression efficiency. When the corresponding packet header field cannot be locally found at the receiver, the local packet header mapping information of the second device may be updated by pulling the remote packet header mapping information stored in the server, to query for the corresponding packet header field again, so as to decompress the header. The manner of deploying a configuration update center of the packet header mapping information in the server helps better maintain the packet header mapping information of the receiver.

In some embodiments, as shown in FIG. 8, a data packet processing method is provided. An example in which the method is applied to the server 110 in FIG. 1 is used for description. A specific process is as follows:
801: acquire header data, the header data comprising a plurality of header fields. In some embodiments, the server acquires header data stored in a second device.

After receiving a data packet each time, the second device may parse header in the data packet, to obtain packet header fields in the data packet, and then store the packet header fields. Each packet header field may include a field name and a field value.

The header data in some embodiments may be includes header fields stored in a preset time period by the second device. The preset time period may be set according to an actual situation, for example, may be set to one day. Specifically, the server may acquire header data from the second device every preset time period, to perform statistical analysis on the header data, so as to update remote packet header mapping information according to a statistical analysis result, and actively push updated remote packet header mapping information to a first device and the second device, so that the first device and the second device update local packet header mapping information based on the updated remote packet header mapping information.

802: determine, from the header data and based on remote packet header mapping information, a first header field that is absent from the remote packet header mapping information and a second header field that is present in the remote packet header mapping information, the remote packet header mapping information comprising a mapping relationship between a preset header field and a preset index. The first header field is a newly added packet header field. the second header field is non-newly added packet header field. In other words, step 802 determines a newly added packet header field and a non-newly added packet header field from the header data based on the remote packet header mapping information.

In some embodiments, step 802 includes identify, from the header data and based on field names in the remote packet header mapping information, a first field name absent from the remote packet header mapping information and a second field name present in the remote packet header mapping information.

In some embodiments, step 802 includes: for each header field in the header data, when the respective header field is present in the remote packet header mapping information, determining the respective header field as one second header field; and when the respective header field is absent from the remote packet header mapping information, determining the respective header field as one first header field.

The newly added packet header field refers to a packet header field that does not exist in current remote packet header mapping information. The newly added packet header field is determined from the header data based on the remote packet header mapping information, and if a packet header field in the header data does not occur in the current remote packet header mapping information, the packet header field is the newly added packet header field.

The non-newly added packet header field refers to an existing packet header field in the current remote packet header mapping information. The non-newly added packet header field is determined from the header data based on the remote packet header mapping information, and if a packet header field in the header data occurs in the current remote packet header mapping information, the packet header field is the non-newly added packet header field.

The remote packet header mapping information may be stored in a remote configuration center. The remote packet header mapping information includes a mapping relationship between the preset packet header field and the preset index information. In a specific scenario, a remote configuration center module may store latest packet header mapping information (dictionary), and may actively push an updated dictionary configuration to the first device and the second device. The first device and the second device may passively pull the latest packet header mapping information from the remote configuration center module.

Specifically, the remote packet header mapping information may include first remote mapping information and second remote mapping information, the first remote mapping information may be a common static dictionary in the remote configuration center, and the second remote mapping information may be a less-common static dictionary in the remote configuration center. After the common static dictionary in the remote configuration center is updated, a synchronous update of content of updated common static dictionary in the remote configuration center to local common static dictionaries of the first device and the second device may be triggered. Similarly, after the less-common static dictionary in the remote configuration center is updated, a synchronous update of content of updated less-common static dictionary in the remote configuration center to local less-common static dictionaries of the first device and the second device may be triggered. The synchronous update herein includes content addition and content deletion.

In some embodiments, the operation of "determining a newly added packet header field and a non-newly added packet header field from the header data based on remote packet header mapping information" may include: detecting, for each packet header field in the header data, whether the packet header field exists in the remote packet header mapping information; determining the packet header field as the non-newly added packet header field if it is detected that the packet header field exists in the remote packet header mapping information; or determining the packet header field as the newly added packet header field if it is detected that the packet header field does not exist in the remote packet header mapping information.

803: determine a number of occurrences of the second header field in the header data. In some embodiments, the server collects statistics on occurrence frequency information (i.e., the number of occurrences) of each non-newly added packet header field in the header data.

804: update the remote packet header mapping information based on the number of occurrences of the second header field and first header field. In other words, the server updates the remote packet header mapping information based on the occurrence frequency information and the newly added packet header field.

In some embodiments, the packet header field includes a field name and a field value. Step 803 includes for a field name of the second header field, determining a number of occurrences of a respective field value in the header data. Step 804 includes adding the field name of the first header field and an index mapped to the field name to the remote packet header mapping information; and updating the remote packet header mapping information based on the number of occurrences of the respective field value corresponding to the field name of the second header field.

In some embodiments, the updating the remote packet header mapping information based on the number of occurrences of the respective field value corresponding to the field name of the second header field comprises: when the number of occurrences of the respective field value is greater than a first threshold, adding the respective field value to the remote packet header mapping information; and when the number of occurrences of the respective field value is not greater than the first threshold and the respective field value is present in the remote packet header mapping information, removing the respective field value from the remote packet header mapping information.

In some embodiments, the remote packet header mapping information comprises a first remote mapping information and a second remote mapping information. The adding the field name of the first header field and an index mapped to the field name to the remote packet header mapping information comprises: adding the field name of the first header field and the index mapped to the field name to the first remote mapping information. The step of when the number of occurrences of the respective field value is greater than a first threshold (also referred to as first preset frequency information), adding the respective field value to the remote packet header mapping information comprises: when the number of occurrences of the respective field value is greater than a second threshold (also referred to as second preset frequency information) greater than the first threshold, adding the field name of the second header field, the respective field value, and an index mapped to the field name of the second header field to the first remote mapping information; and when the number of occurrences of the respective field value is between the first threshold and the second threshold, adding the respective field value and index mapped to the field name of the second header field to the second remote mapping information.

In some embodiments, the operation of "determining a newly added packet header field and a non-newly added packet header field from the header data based on remote packet header mapping information" may include: screening a newly added field name and a non-newly added field name from the header data based on field names in the current remote packet header mapping information.

The operation of "collecting statistics on occurrence frequency information of each non-newly added packet header field in the header data" may include: collecting statistics on field values corresponding to non-newly added field names in the header data, to obtain occurrence frequency information of each field value corresponding to the non-newly added field name.

The operation of "updating the remote packet header mapping information based on the occurrence frequency information and the newly added packet header field" may include: adding the newly added field name and index information mapped by the newly added field name to the remote packet header mapping information; and updating added remote packet header mapping information based on occurrence frequency information of each field value corresponding to the non-newly added field name.

The packet header field may include a field name (that is, header name) and a field value (that is, header value).

In some embodiments, the newly added packet header field may be specifically the newly added field name, and the non-newly added packet header field may be the non-newly added field name. If a field name in the header data does not occur in the current remote packet header mapping information, the field name is the newly added field name; or if a field name in the header data occurs in the current remote packet header mapping information, the field name is the non-newly added field name.

For the newly added field name, a mapping relationship between the newly added field name and the index information may be established, and the mapping relationship is added to the remote packet header mapping information.

For the non-newly added field name, statistics collection is performed on a field value corresponding to the non-newly added field name in the header data, to collect statistics on an occurrence frequency of each field value corresponding to the non-newly added field name. The added remote packet header mapping information is updated based on the occurrence frequency. An update manner may include: performing field value adding or deletion processing on the added remote packet header mapping information.

In some embodiments, the operation of "updating added remote packet header mapping information based on occurrence frequency information of each field value corresponding to a non-newly added field name" may include:
updating, when occurrence frequency information of a field value corresponding to the non-newly added field name is greater than first preset frequency information, the field value corresponding to the non-newly added field name to the added remote packet header mapping information; or deleting, when occurrence frequency information of a field value corresponding to the non-newly added field name is not greater than the first preset frequency information and it is detected that the field value exists in the added remote packet header mapping information, the field value from the added remote packet header mapping information.

The first preset frequency information is a frequency threshold that may be set according to an actual situation, and is configured for determining whether a field value corresponding to the non-newly added field name is updated to the added remote packet header mapping information. When occurrence frequency information of a field value corresponding to the non-newly added field name is greater than the threshold, the field value is updated to the added remote packet header mapping information; or the field value is deleted from the added remote packet header mapping information when the occurrence frequency information is not greater than the threshold and the field value exists in the added remote packet header mapping information. If the first preset frequency information is set to 2, the remote packet header mapping information may be updated according to the foregoing rule.

The second preset frequency information is a frequency threshold that may be set according to an actual situation and is greater than the first preset frequency information. The second preset frequency information is configured for determining, in a case that the remote packet header mapping information includes the first remote mapping information and the second remote mapping information, remote mapping information to which a field value corresponding to the non-newly added field name is updated in detail. The non-newly added field name, the field value, and corresponding index information are updated to the added first remote mapping information when occurrence frequency information of a field value corresponding to the non-newly added field name is greater than the threshold; or the field value and corresponding index information are added to the second remote mapping information when the occurrence frequency information is not greater than the threshold but is greater than the first preset frequency information. For example, the first preset frequency information may be set to 2, and the second preset frequency information may be set to 5.

The first preset frequency information may be set according to an actual situation, for example, may be set to 2. When the first preset frequency information is set to 2, if an occurrence frequency of a field value corresponding to the non-newly added field name in the header data is greater than a threshold of 2 and the field value does not exist in the remote packet header mapping information, the field value may be added to the remote packet header mapping information. If an occurrence frequency of a field value corresponding to the non-newly added field name in the header data is not greater than 2, it indicates that the field value is an uncommon field value, and it is detected that the field value exists in the remote packet header mapping information, an entry corresponding to the field value is deleted from the remote packet header mapping information, so that the remote configuration center has enough space to accommodate a new dictionary entry.

In some embodiments, the remote packet header mapping information includes the first remote mapping information and the second remote mapping information. The operation of "adding a newly added field name and index information mapped by the newly added field name to the remote packet header mapping information" may include: adding the newly added field name and the index information mapped by the newly added field name to the first remote mapping information.

The operation "updating, when occurrence frequency information of a field value corresponding to the non-newly added field name is greater than first preset frequency information, the field value corresponding to the non-newly added field name to the added remote packet header mapping information" may include: updating, when the occurrence frequency information of the field value corresponding to the non-newly added field name is greater than the second preset frequency information, the non-newly added field name, the field value corresponding to the non-newly added field name, and corresponding index information to the added first remote mapping information, where the first preset frequency information is less than the second preset frequency information; or adding, when the occurrence frequency information of the field value corresponding to the non-newly added field name is not greater than the second preset frequency information but is greater than the first preset frequency information, the field value corresponding to the non-newly added field name and index information mapped by the non-newly added field name to the second remote mapping information.

The first remote mapping information is a part of the remote packet header mapping information, may be specifically a common static dictionary in the remote configuration center, and is configured for storing common packet header field-related information, such as a relationship among a common field name, a field value, and index information, or a relationship between a common field name and index information. When the remote packet header mapping information is updated, a newly added field name and index information mapped by the newly added field name are added to the information, and a non-newly added field name, a field value, and index information that satisfy a frequency condition are updated to the information.

The second remote mapping information is a part of the remote packet header mapping information, may be specifically a less-common static dictionary in the remote configuration center, and is configured for storing less-common packet header field-related information, for example, a relationship between a less-common field value and index information. When occurrence frequency information of a field value corresponding to a non-newly added field name is not greater than the second preset frequency information but is greater than the first preset frequency information, the field value and the corresponding index information may be added to the information.

Specifically, the first remote mapping information may be the common static dictionary in the remote configuration center, and the second remote mapping information may be the less-common static dictionary in the remote configuration center. In some embodiments, the newly added field name and the index information mapped by the newly added field name may be added to the common static dictionary in the remote configuration center.

In some embodiments, the first preset frequency information may be set to 2, and the second preset frequency information may be set to 5. Specifically, if an occurrence frequency of a field value corresponding to the non-newly added field name in the header data is greater than a threshold of 5, it indicates that the field value is a common header field value, and it is detected that no corresponding entry of the field value exists in the common static dictionary in the remote configuration center, a mapping relationship (the non-newly added field name is a key in a key-value pair, and the field value is a value in the key-value pair) among the non-newly added field name, the field value, and index information may be established, and the mapping relationship is added to the common static dictionary. If an occurrence frequency of a field value corresponding to the non-newly added field name in the header data is greater than the threshold of 2, but is not greater than the threshold of 5, it indicates that the field value is a less-common header field value, a mapping relationship between the field value and index information is established, and the mapping relationship is added to the less-common static dictionary.

805: transmit the updated remote packet header mapping information to a first device and a second device.

In some embodiments, the sever triggers transmission of updated remote packet header mapping information to the first device and the second device, so that the first device and the second device update local packet header mapping information of the first device and the second device.

According to the data packet processing method, the server dynamically updates remote packet header mapping information based on collected header data, occurrence frequencies, and newly appearing header fields. The updated mapping information is pushed to the first and second devices, thereby adapting the compression dictionary to traffic changes, balancing storage space and compression efficiency through threshold-based addition/removal, and ensuring strong consistency between the transmitter and the receiver, which reduces system maintenance complexity and improves overall reliability.

Specifically, if only the first remote mapping information is updated, but the second remote mapping information is not updated, only updated first remote mapping information may be transmitted to the first device and the second device, to trigger the first device and the second device in updating local common static dictionaries of the first device and the second device. Similarly, if only the second remote mapping information is updated, but the first remote mapping information is not updated, only updated second remote mapping information may be transmitted to the first device and the second device, to trigger the first device and the second device in updating local less-common static dictionaries of the first device and the second device. If both the first remote mapping information and the second remote mapping information in the remote configuration center are updated, the first remote mapping information and the second remote mapping information are synchronously updated to the first device and the second device, to update the local common static dictionaries of the first device and the second device based on the first remote mapping information, and update the local less-common static dictionaries of the first device and the second device based on the second remote mapping information.

In some embodiments, the data packet processing method may further include: receiving, from an electronic device, a request for the remote packet header mapping information, the electronic device being the first device or the second device; and in response to the request (also referred to as pull request information), sending the remote packet header mapping information to the electronic device, wherein the remote packet header mapping information is used for updating local packet header mapping information in the electronic device.

In some embodiments, the data packet processing method may further include: receiving pull request information transmitted by an electronic device, the pull request information indicating to pull the remote packet header mapping information, and the electronic device being the first device or the second device; and transmitting current remote packet header mapping information to the electronic device based on the pull request information, so that the electronic device updates local packet header mapping information of the electronic device based on the current remote packet header mapping information.

The pull request information is information transmitted by the first device or the second device to the server. The information indicates the server to pull the remote packet header mapping information. The server transmits, based on the information, the current remote packet header mapping information to the electronic device that transmits the request, so that the electronic device updates, based on the information, the local packet header mapping information of the electronic device.

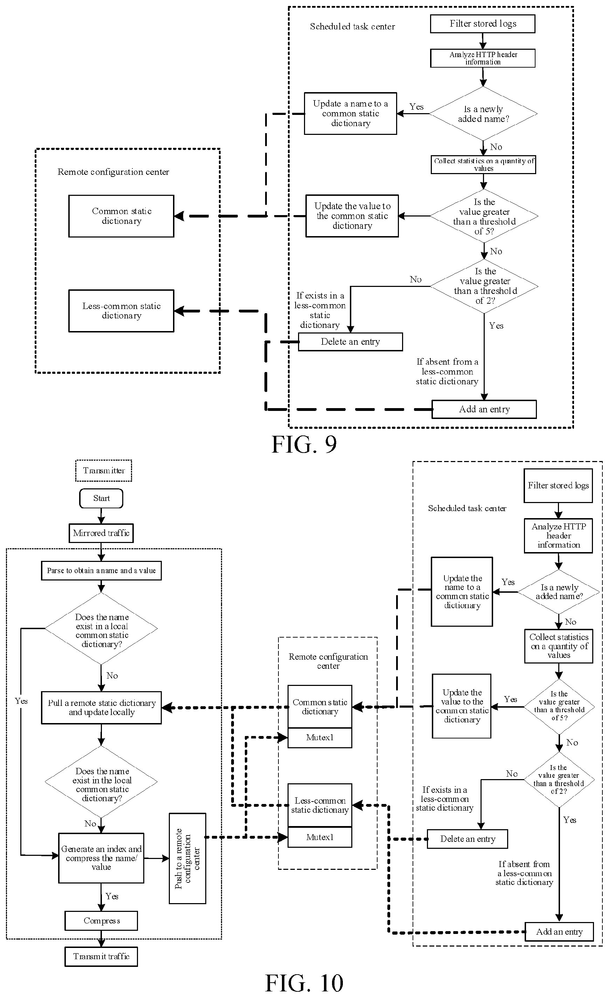

In a specific scenario, when a service starts to be deployed, the common/less-common static dictionary in the remote configuration center has an initialized value, and the initialized value is a piece of dictionary data configured according to a specific service. In addition, data in the dictionary is continuously updated as a traffic audit service operates. A component configured to update the remote configuration center is a scheduled task center shown in FIG. 9.

The scheduled task center is mainly configured to dynamically update dictionary data of the remote configuration center in real time. A background scheduled task performs statistical analysis on a log (specifically, header data) stored in the traffic audit service (specifically, the foregoing second device), to obtain HTTP header statistical information within a period of time. For the HTTP header statistical information, a header name is first analyzed, and when the header name is a newly added field name, the header name is directly stored into the common static dictionary. Then, a threshold analysis is performed according to a header value, and different processing measures are taken according to the header value, so as to dynamically update the dictionary data.

Specifically, referring to FIG. 9, a process in which a background scheduled task center dynamically maintains and updates a dictionary in a remote configuration center is as follows:
A: First, screen, by the scheduled task center, formatted traffic data stored by a receiver;
B: Then, perform statistical analysis on HTTP header information in the traffic data;
C: Determine whether a header name is a newly added field name, and directly update the header name to a common static dictionary in the remote configuration center if the header name is the newly added field name. Because a quantity of header names in a traffic audit service is limited, the common static dictionary is enough to store all header information of the header name; and in this case, the remote configuration center is triggered in actively pushing updated common static dictionary data to a transmitter and the receiver;
D: Collect statistics on a field value corresponding to the header name if the header name is not the newly added field name;
E: Determine an occurrence frequency of a current value. If the value is greater than the threshold of 5, it indicates that the HTTP header information frequently occurs, combine the value with header name information of the value, and update the combined value to the common static dictionary together. In this case, the remote configuration center is triggered in actively pushing updated common static dictionary data to the transmitter and the receiver (note that the threshold of 5 may be configured).
F: Add the value to a less-common static dictionary if the value is greater than the threshold of 2 and the value does not exist in the less-common static dictionary. In this case, the remote configuration center is triggered in actively pushing updated less-common static dictionary data to the transmitter and the receiver (note that the threshold of 2 may be configured).
G: Remove the value from the less-common static dictionary if the value is less than or equal to the threshold of 2 and the value exists in the less-common static dictionary. In this case, the remote configuration center is triggered in actively pushing, to the transmitter and the receiver, updated less-common static dictionary data after removal.

Each update to the common/less-common static dictionary by the scheduled task center triggers the remote configuration center in actively pushing dictionary data to the transmitter and the receiver. Such a centralized remote configuration center ensures uniqueness and reliability of a data source, and the transmitter and the receiver pull the data source from the same data source. Therefore, inconsistency of data is rarely caused.

In some embodiments, the transmitter may alternatively update a local common/less-common static dictionary according to parsed HTTP header information, and then push updated local common/less-common static dictionary to the remote configuration center. In this case, a concurrent conflict may be generated with updating of a scheduled task, and a concurrency lock needs to be used for control. As shown in FIG. 10, when the transmitter cannot find data in the local common/less-common static dictionary, the transmitter first pulls the data from the remote configuration center. When data still cannot be found after pulling, the transmitter may locally determine whether the common/less-common static dictionary needs to be updated according to a rule. If the common/less-common static dictionary needs to be updated, an index is generated according to a specific algorithm, and data is pushed to the remote configuration center while compression is performed. Therefore, the transmitter not only pulls the data of the remote configuration center, but also updates the data of the remote configuration center, and a concurrent conflict may occur with updating of the data of the remote configuration center in the scheduled task. In this case, concurrent control may be performed by adding a mutex concurrency lock. However, concurrent control may affect a packet processing speed of the transmitter. Currently, queries per second (qps) of a traffic audit service reach up to 4 w/s. However, computing resources are 4 cores and 8 G. Under such extremely severe computing resources, if concurrent control is performed by using the concurrency lock, concurrent processing in a service is affected, and peak traffic may even not be handled.

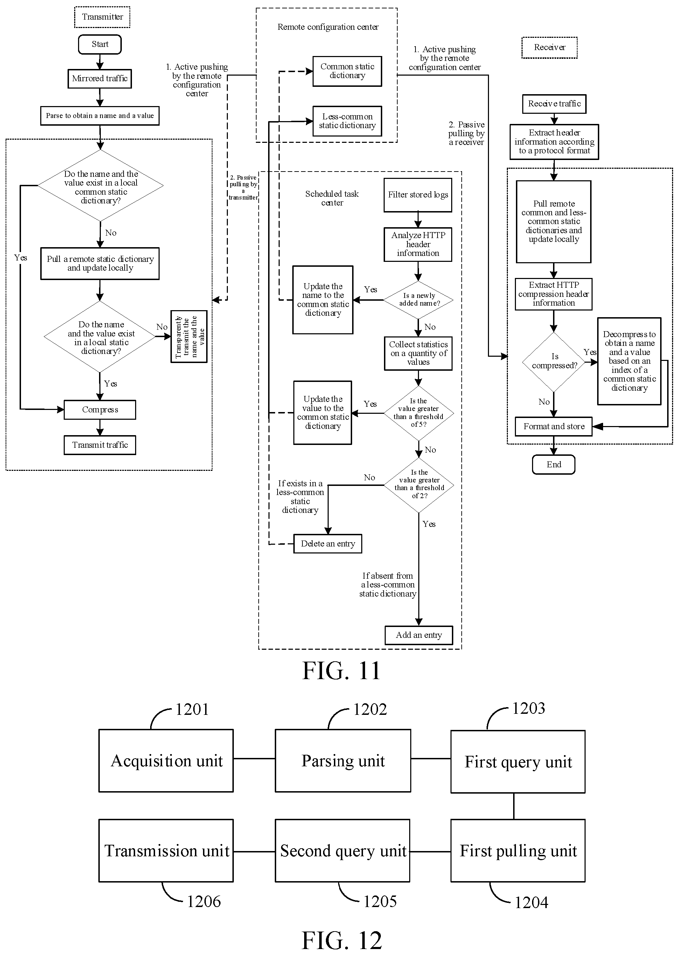

According to the data packet processing method provided in this application, updating may further be uniformly controlled in a scheduled task, and the scheduled task updates dictionary data of the remote configuration center according to statistical data. However, a previous operation of updating the dictionary data by the transmitter is abandoned. In this way, a performance problem caused by concurrency lock control can be reduced, and a packet processing speed of a traffic audit service can be improved. A general schematic diagram is shown in FIG. 11. Update operation (adding/deleting) of the remote configuration center is uniformly performed by the scheduled task. The scheduled task updates the common/less-common static dictionary according to a specific policy, and pushes updated common/less-common static dictionary to the remote configuration center.

The transmitter and the receiver respectively acquire dictionary configurations of the remote configuration center, and there are two acquisition manners. One is passive pulling, that is, latest dictionary configuration information is pulled from the remote configuration center on demand when the transmitter/receiver needs the latest dictionary configuration information. The other is active pushing, that is, after the scheduled task completes update in the remote configuration center, a callback is triggered, and the callback is used by the remote configuration center to actively update a dictionary configuration to the transmitter and the receiver.

In this case, there may be a problem of concurrent data processing. That is, in a process in which the scheduled task pushes latest dictionary configuration to the remote configuration center, the transmitter pulls latest data of the remote configuration center. In this case, data updated by the scheduled task cannot be pulled, and data inconsistency may occur. However, this case can be avoided through multiple times of pulling, and mutex control is not needed. Therefore, concurrency performance is relatively good, the throughput of the traffic audit service is not affected, and relatively good service performance is achieved.

In this application, in a distributed cloud scenario, a unified remote configuration center may be configured to store HTTP header compression configuration data, thereby improving data maintainability. Specifically, in the distributed cloud scenario, in this application, mirrored layer-3 traffic in a customer local IDC is received and HTTP header compression is utilized to save bandwidth traffic. During compression, the HTTP header compression configuration data is stored by using the remote configuration center, thereby facilitating maintenance of data of the transmitter and data of the receiver. The transmitter and the receiver only need to acquire corresponding configuration data in the remote configuration center, and the transmitter is not required to trigger the receiver in adding new entries. This processing manner is implemented clearly and data is easily maintained.

In some embodiments, the header data stored in the second device may be acquired, and the header data includes the plurality of packet header fields; the newly added packet header field and the non-newly added packet header field are determined from the header data based on the remote packet header mapping information, the remote packet header mapping information including the mapping relationship between the preset packet header field and the preset index information; statistics collection is performed on occurrence frequency information of each non-newly added packet header field in the header data; and the remote packet header mapping information is updated based on the occurrence frequency information and the newly added packet header field; and transmission of updated remote packet header mapping information to the first device and the second device is triggered, so that the first device and the second device update the local packet header mapping information of the first device and the second device.

In this application, the header data of the second device may be acquired, and then statistical analysis is performed on the header data, to update the remote packet header mapping information according to the statistical analysis result, so as to improve integrity of the compressed configuration data of the packet header field stored in the remote packet header mapping information. Moreover, after the remote packet header mapping information is updated, updated data is actively pushed to the transmitter and the receiver, so as to trigger local data update of the transmitter and the receiver. In this way, data of the transmitter and data of the receiver are maintained by using the unified data configuration center, and consistency of data of the transmitter and data of the receiver can be ensured more effectively.

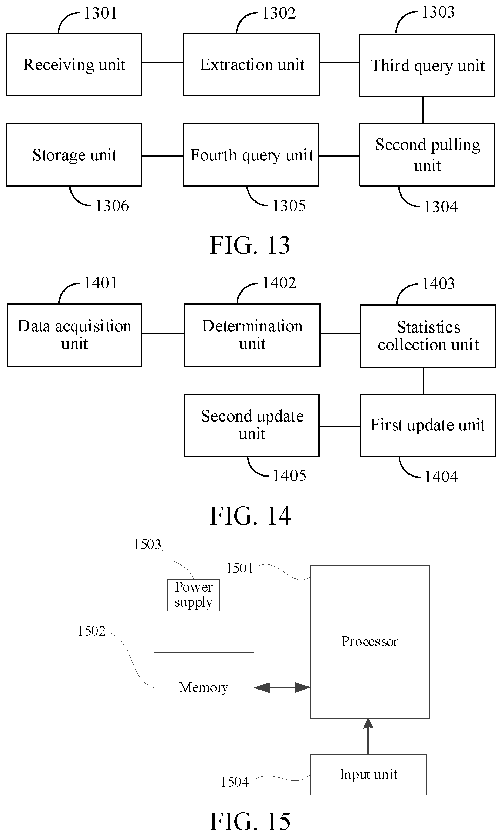

To better implement the foregoing method, an embodiment of this application further provides a data packet processing system. The data packet processing system may include a first data packet processing apparatus 12, a second data packet processing apparatus 42, and a third data packet processing apparatus 43. As shown in FIG. 12, the first data packet processing apparatus 12 may include an acquisition unit 1201, a parsing unit 1202, a first query unit 1203, a first pulling unit 1204, a second query unit 1205, and a transmission unit 1206. As shown in FIG. 13, the second data packet processing apparatus 42 may include a receiving unit 4201, an extraction unit 4202, a third query unit 4203, a second pulling unit 4204, a fourth query unit 4205, and a storage unit 4206. As shown in FIG. 14, the third data packet processing apparatus 43 may include a data acquisition unit 4301, a determination unit 4302, a statistics collection unit 4303, a first update unit 4304, and a second update unit 4305.

### A. First data packet processing apparatus 12

(1) Acquisition unit 1201:
   In some embodiments, an acquisition unit is configured to acquire a first data packet and local packet header mapping information, the first data packet comprising a first header and a first payload, and the local packet header mapping information comprising a mapping relationship between a preset header field and a preset index;
   In some embodiments, an acquisition unit is acquire to-be-transmitted data packet and local packet header mapping information, the data packet including header and payload, and the packet header mapping information including a mapping relationship between a preset packet header field and preset index information;
(2) Parsing unit 1202:
   In some embodiments, a parsing unit is configured to parse the first header to obtain a first header field.
   In some embodiments, a parsing unit is configured to parse the header in the data packet, to obtain a packet header field of the data packet.
(3) First query unit 1203:
   In some embodiments, a first query unit is configured to query, from the local packet header mapping information, a first index mapped to the first header field;
   In some embodiments, a first query unit is configured to query the local packet header mapping information for index information mapped by the packet header field;
(4) First pulling unit 1204
   a first pulling unit, configured to: pull remote packet header mapping information from a server when the index information mapped by the packet header field is not found in the local packet header mapping information, to update the local packet header mapping information based on the remote packet header mapping information;
(5) Second query unit 1205:
   a second query unit, configured to query updated local packet header mapping information again for the index information mapped by the packet header field; and
(6) Transmission unit 1206:
   In some embodiments, a transmission unit is configured to: obtain a second data packet by replacing the first header field in the first header with the first index.

In some embodiments, a transmission unit is configured to: package the index information mapped by the packet header field and the payload when the index information mapped by the packet header field is found, to obtain compressed data packet, and transmit the compressed data packet.

In some embodiments of this application, the data packet processing apparatus further includes a data transmission unit.

The data transmission unit is configured to package the packet header field and the payload when the index information mapped by the packet header field is not found in the updated local packet header mapping information, to obtain packaged data packet; and transmit the packaged data packet.

### B. Second data packet processing apparatus 13

(7) Receiving unit 1301:
   In some embodiment, a receiving unit is configured to receive a second data packet, the second data packet comprising a second header and a first payload
   In some embodiment, a receiving unit is configured to receive compressed data packet, the compressed data packet including header and payload.
(8) Extraction unit 1302:
   In some embodiment, an extraction unit is configured to parse the second header to obtain a first index.
   In some embodiment, an extraction unit is configured to extract the header from the compressed data packet and detect the header;
(9) Third query unit 1303:
   In some embodiment, a third query unit is configured to obtain local packet header mapping information comprising a mapping relationship between a preset header field and a preset index; query, from the local packet header mapping information, a first header field mapped by the first index;
   In some embodiment, a third query unit is configured to query, when it is detected that the header is index information obtained after packet header compression, local packet header mapping information for a packet header field mapped by the index information, the packet header mapping information including a mapping relationship between a preset packet header field and preset index information;
(10) Second pulling unit 1304:
   a second pulling unit, configured to: pull remote packet header mapping information from a server when the packet header field mapped by the index information is not found in the local packet header mapping information, to update the local packet header mapping information based on the remote packet header mapping information;
(11) Fourth query unit 1305:
   a fourth query unit, configured to query updated local packet header mapping information again for the packet header field mapped by the index information; and
(12) Storage unit 1306:
   In some embodiment, a storage unit is configured to: obtain a first data packet by replacing the first index in the second header with the first header field.

In some embodiment, a storage unit is configured to: store the packet header field and payload in the compressed data packet when the packet header field mapped by the index information is found.

Optionally, in some embodiments of this application, the data packet processing apparatus further includes a data storage unit.

A data storage unit is configured to store, when it is detected that the header is an uncompressed packet header field, the uncompressed packet header field and the payload in the compressed data packet.

### C. Third data packet processing apparatus 14

(13) Data acquisition unit 1401:
   In some embodiment, a data acquisition unit is configured to acquire header data, the header data comprising a plurality of header fields.
   In some embodiment, a data acquisition unit is configured to acquire header data stored in a second device, the header data including a plurality of packet header fields.
(14) Determination unit 1402:
   In some embodiment, a determination unit is configured to determine, from the header data and based on remote packet header mapping information, a first header field that is absent from the remote packet header mapping information and a second header field that is present in the remote packet header mapping information, the remote packet header mapping information comprising a mapping relationship between a preset header field and a preset index.
   In some embodiment, a determination unit is configured to determine a newly added packet header field and a non-newly added packet header field from the header data based on remote packet header mapping information, the remote packet header mapping information including a mapping relationship between a preset packet header field and preset index information;
(15) Statistics collection unit 1403:
   In some embodiment, a statistics collection unit is configured to determine a number of occurrences of the second header field in the header data.
   In some embodiment, a statistics collection unit is configured to collect statistics on occurrence frequency information of each non-newly added packet header field in the header data.
(16) First update unit 1404:
   In some embodiment, a first update unit is configured to update the remote packet header mapping information based on the number of occurrences of the second header field and first header field.
   In some embodiment, a first update unit is configured to update the remote packet header mapping information based on the occurrence frequency information and the newly added packet header field; and
(17) Second update unit 1405:
   In some embodiment, a second update unit is configured to transmit the updated remote packet header mapping information to a first device and a second device.

In some embodiment, a second update unit is configured to trigger transmission of updated remote packet header mapping information to a first device and the second device, so that the first device and the second device update local packet header mapping information of the first device and the second device.

Optionally, in some embodiments of this application, the packet header field includes a field name and a field value. The determination unit may be specifically configured to screen a newly added field name and a non-newly added field name from header data based on a field name in current remote packet header mapping information.

The statistics collection unit may be specifically configured to collect statistics on field values corresponding to non-newly added field names in the header data, to obtain occurrence frequency information of the field values corresponding to the non-newly added field names.

The first update unit may include an addition subunit and an update subunit.

The addition subunit is configured to add a newly added field name and index information mapped by the newly added field name, to the remote packet header mapping information; and the update subunit is configured to update added remote packet header mapping information based on occurrence frequency information of each field value corresponding to a non-newly added field name.

Optionally, in some embodiments of this application, the update subunit may be specifically configured to update, when the occurrence frequency information of the field value corresponding to the non-newly added field name is greater than first preset frequency information, the field value corresponding to the non-newly added field name to the added remote packet header mapping information; or delete, when the occurrence frequency information of the field value corresponding to the non-newly added field name is not greater than first preset frequency information and it is detected that the field value exists in the added remote packet header mapping information, the field value from the added remote packet header mapping information.

Optionally, in some embodiments of this application, the remote packet header mapping information includes first remote mapping information and second remote mapping information. The addition subunit may be specifically configured to add the newly added field name and index information mapped by the newly added field name to the first remote mapping information.

The operation "updating, when occurrence frequency information of a field value corresponding to the non-newly added field name is greater than first preset frequency information, the field value corresponding to the non-newly added field name to the added remote packet header mapping information" may include: updating, when the occurrence frequency information of the field value corresponding to the non-newly added field name is greater than the second preset frequency information, the non-newly added field name, the field value corresponding to the non-newly added field name, and corresponding index information to the added first remote mapping information, where the first preset frequency information is less than the second preset frequency information; or adding, when the occurrence frequency information of the field value corresponding to the non-newly added field name is not greater than the second preset frequency information but is greater than the first preset frequency information, the field value corresponding to the non-newly added field name and index information mapped by the non-newly added field name to the second remote mapping information.

Optionally, in some embodiments of this application, the data packet processing apparatus may include a request update unit. The request update unit is configured to receive pull request information transmitted by an electronic device, the pull request information indicating to pull the remote packet header mapping information, and the electronic device being the first device or the second device; and transmit current remote packet header mapping information to the electronic device based on the pull request information, so that the electronic device updates local packet header mapping information of the electronic device based on the current remote packet header mapping information.

In some embodiments, the acquisition unit 1201 may acquire the to-be-transmitted data packet and the local packet header mapping information, the data packet including the header and the payload, and the packet header mapping information including the mapping relationship between the preset packet header field and the preset index information; the parsing unit 1202 parses the header in the data packet, to obtain the packet header field of the data packet; the first query unit 1203 queries the local packet header mapping information for the index information mapped by the packet header field; the first pulling unit 1204 pulls the remote packet header mapping information from the server when the index information mapped by the packet header field is not found in the local packet header mapping information, to update the local packet header mapping information based on the remote packet header mapping information; the second query unit 1205 queries the updated local packet header mapping information again for the index information mapped by the packet header field; and the transmission unit 1206 packages the index information mapped by the packet header field and the payload when the index information mapped by the packet header field is found, to obtain the compressed data packet, and transmit the compressed data packet. In this application, based on the packet header mapping information, the packet header field can be compressed by using the corresponding index information, to reduce a transmitted data volume. In addition, a transmitter locally has its own packet header mapping information. During compression, the transmitter first queries for index information locally, so as to improve data compression efficiency. When the transmitter cannot find corresponding index information locally, local packet header mapping information of the first device may be updated by pulling remote packet header mapping information stored in the server, to query for corresponding index information again, so as to compress the packet header field. The manner of deploying a configuration update center of the packet header mapping information in the server helps better maintain the packet header mapping information of the transmitter.

Alternatively, the receiving unit 1301 may receive the compressed data packet, the compressed data packet including the header and the payload; and the extraction unit 1302 extracts the header from the compressed data packet, and detects the header. When it is detected that the header is the index information obtained after packet header compression, the third query unit 1303 queries the local packet header mapping information for the packet header field mapped by the index information, the packet header mapping information including the mapping relationship between the preset packet header field and the preset index information; the second pulling unit 1304 pulls the remote packet header mapping information from the server when the packet header field mapped by the index information is not found in the local packet header mapping information, to update the local packet header mapping information based on the remote packet header mapping information; and the fourth query unit 1305 queries the updated local packet header mapping information again for the packet header field mapped by the index information; and the storage unit 1306 stores the packet header field and the payload in the compressed data packet when the packet header field mapped by the index information is found. In this application, the header may be compressed by using the index, to reduce a transmitted data volume. In addition, in a process of decompressing the data packet, the data packet may be first decompressed by using local packet header mapping information of a receiver, so as to improve decompression efficiency. When the corresponding packet header field cannot be locally found at the receiver, local packet header mapping information of the second device may be updated by pulling the remote packet header mapping information stored in the server, to query for the corresponding packet header field again, so as to decompress the header. The manner of deploying a configuration update center of the packet header mapping information in the server helps better maintain the packet header mapping information of the receiver.

Alternatively, the data acquisition unit 1401 may acquire the header data stored in the second device, the header data including the plurality of packet header fields; the determination unit 1402 determines the newly added packet header field and the non-newly added packet header field from the header data based on the remote packet header mapping information, the remote packet header mapping information including the mapping relationship between the preset packet header field and the preset index information; and the statistics collection unit 1403 collects statistics on the occurrence frequency information of each non-newly added packet header field in the header data; the first update unit 1404 updates the remote packet header mapping information based on the occurrence frequency information and the newly added packet header field; and the second update unit 1405 is triggered in transmitting the updated remote packet header mapping information to the first device and the second device, so that the first device and the second device update the local packet header mapping information of the first device and the second device. In this application, the header data of the second device may be acquired, and then statistical analysis is performed on the header data, to update the remote packet header mapping information according to the statistical analysis result, so as to improve integrity of the compressed configuration data of the packet header field stored in the remote packet header mapping information. Moreover, after the remote packet header mapping information is updated, updated data is actively pushed to the transmitter and the receiver, so as to trigger local data update of the transmitter and the receiver. In this way, data of the transmitter and data of the receiver are maintained by using the unified data configuration center, and consistency of data of the transmitter and data of the receiver can be ensured more effectively.

Embodiments of this application further provide an electronic device. FIG. 15 is a schematic structural diagram of an electronic device according to an embodiment of this application. The electronic device may be a terminal, a server, or the like. Specifically,
the electronic device may include components such as a processor 1501 of one or more processing cores, a memory 1502 of one or more computer-readable storage media, a power supply 1503, and an input unit 1504. The structure of the electronic device shown in FIG. 15 does not constitute a limitation to the electronic device. The electronic device may include more or fewer parts than those shown in the figure, may combine some parts, or may have different part arrangements.

The processor 1501 is a control center of the electronic device, which is connected to various parts of the entire electronic device by using various interfaces and lines. The processor 1501 runs a software program and a module that are stored in the memory 1502 and calls data stored in the memory 1502, to perform various functional applications and data processing. Optionally, the processor 1501 may include one or more processing cores. Preferably, the processor 1501 may integrate an application processor and a modem processor, where the application processor mainly handles an operating system, user interface, and applications, while the modem processor mainly handles wireless communications. The foregoing modem may either not be integrated into the processor 1501.

The memory 1502 may be configured to store a software program and a module. The processor 1501 runs the software program and the module that are stored in the memory 1502, to perform various functional applications and data processing. The memory 1502 may mainly include a program storage area and a data storage area, where the program storage area may store an operating system and application programs required for at least one function (such as an audio playback function, an image playback function, etc.); the data storage area may store data created during the use of the electronic device, and the like. In addition, the memory 1502 may include a high-speed random access memory, or may include a non-volatile memory, for example, at least one magnetic disk storage device, a flash memory device, or other volatile solid-state storage devices. Correspondingly, the memory 1502 may further include a memory controller to provide access of the processor 1501 to the memory 1502.

The electronic device further includes a power supply 1503 for supplying power to the components. For example, the power supply 1503 may be logically connected to the processor 1501 by using a power management system, thereby implementing functions such as charging, discharging, and power consumption management by using the power management system. The power supply 1503 may further include one or more of a direct current or alternating current power supply, a re-charging system, a power failure detection circuit, a power supply converter or inverter, a power supply state indicator, and any other components.

The electronic device may further include an input unit 1504. The input unit 1504 may be configured to receive entered numeric or character information and generate keyboard, mouse, joystick, optical, or trackball signal input related to user settings and function control.

Although not shown in the figure, the electronic device may further include a display unit and the like. Details are not described herein again. In some embodiments, the processor 1501 in the electronic device may load, according to the following instructions, executable files corresponding to processes of one or more application programs into the memory 1502. The processor 1501 runs the application programs stored in the memory 1502, to implement various functions, for example:
acquiring to-be-transmitted data packet and local packet header mapping information, the data packet including header and payload, and the packet header mapping information including a mapping relationship between a preset packet header field and preset index information; parsing the header in the data packet, to obtain a packet header field of the data packet; querying the local packet header mapping information for index information mapped by the packet header field; pulling remote packet header mapping information from a server when the index information mapped by the packet header field is not found in the local packet header mapping information, to update the local packet header mapping information based on the remote packet header mapping information; querying updated local packet header mapping information again for the index information mapped by the packet header field; and packaging the index information mapped by the packet header field and the payload when the index information mapped by the packet header field is found, to obtain compressed data packet, and transmitting the compressed data packet;
alternatively, receiving compressed data packet, the compressed data packet including header and payload; extracting the header from the compressed data packet, and detecting the header; querying, when it is detected that the header is index information obtained after packet header compression, local packet header mapping information for a packet header field mapped by the index information, the packet header mapping information including a mapping relationship between a preset packet header field and preset index information; pulling remote packet header mapping information from a server when the packet header field mapped by the index information is not found in the local packet header mapping information, to update the local packet header mapping information based on the remote packet header mapping information; querying updated local packet header mapping information again for the packet header field mapped by the index information; and storing the packet header field and payload in the compressed data packet when the packet header field mapped by the index information is found;
alternatively, acquiring header data stored in a second device, the header data including a plurality of packet header fields; determining a newly added packet header field and a non-newly added packet header field from the header data based on remote packet header mapping information, the remote packet header mapping information including a mapping relationship between a preset packet header field and preset index information; collecting statistics on occurrence frequency information of each non-newly added packet header field in the header data; updating the remote packet header mapping information based on the occurrence frequency information and the newly added packet header field; and triggering transmission of updated remote packet header mapping information to a first device and the second device, so that the first device and the second device update local packet header mapping information of the first device and the second device.

For specific implementations of the above operations, refer to the foregoing embodiments. Details are not described herein again.

In some embodiments, the to-be-transmitted data packet and the local packet header mapping information are acquired, the data packet including the header and the payload, and the packet header mapping information including the mapping relationship between the preset packet header field and the preset index information; the header in the data packet is parsed, to obtain the packet header field of the data packet; the local packet header mapping information is queried for the index information mapped by the packet header field; the remote packet header mapping information is pulled from the server when the index information mapped by the packet header field is not found in the local packet header mapping information, to update the local packet header mapping information based on the remote packet header mapping information; the updated local packet header mapping information is queried again for the index information mapped by the packet header field; and the index information mapped by the packet header field and the payload are packaged when the index information mapped by the packet header field is found, to obtain the compressed data packet, and the compressed data packet is transmitted. In this application, based on the packet header mapping information, the packet header field can be compressed by using the corresponding index information, to reduce a transmitted data volume. In addition, a transmitter locally has its own packet header mapping information. During compression, the transmitter first queries for index information locally, so as to improve data compression efficiency. When the transmitter cannot find corresponding index information locally, local packet header mapping information of the first device may be updated by pulling remote packet header mapping information stored in the server, to query for corresponding index information again, so as to compress the packet header field. The manner of deploying a configuration update center of the packet header mapping information in the server helps better maintain the packet header mapping information of the transmitter.

Alternatively, the compressed data packet may be received. The compressed data packet includes the header and the payload; the header is extracted from the compressed data packet, and the header is detected; when it is detected that the header is the index information obtained after packet header compression, the local packet header mapping information is queried for the packet header field mapped by the index information, the packet header mapping information including the mapping relationship between the preset packet header field and the preset index information; the remote packet header mapping information is pulled from the server when the packet header field mapped by the index information is not found in the local packet header mapping information, to update the local packet header mapping information based on the remote packet header mapping information; and the updated local packet header mapping information is queried again for the packet header field mapped by the index information; and the packet header field and the payload in the compressed data packet are stored when the packet header field mapped by the index information is found. In this application, the header may be compressed by using the index, to reduce a transmitted data volume. In addition, in a process of decompressing the data packet, the data packet may be first decompressed by using local packet header mapping information of a receiver, so as to improve decompression efficiency. When the corresponding packet header field cannot be locally found at the receiver, local packet header mapping information of the second device may be updated by pulling the remote packet header mapping information stored in the server, to query for the corresponding packet header field again, so as to decompress the header. The manner of deploying a configuration update center of the packet header mapping information in the server helps better maintain the packet header mapping information of the receiver.

Alternatively, the header data stored in the second device may be acquired, the header data including the plurality of packet header fields; the newly added packet header field and the non-newly added packet header field are determined from the header data based on the remote packet header mapping information, the remote packet header mapping information including the mapping relationship between the preset packet header field and the preset index information; statistics collection is performed on occurrence frequency information of each non-newly added packet header field in the header data; and the remote packet header mapping information is updated based on the occurrence frequency information and the newly added packet header field; and transmission of updated remote packet header mapping information to the first device and the second device is triggered, so that the first device and the second device update the local packet header mapping information of the first device and the second device. In this application, the header data of the second device may be acquired, and then statistical analysis is performed on the header data, to update the remote packet header mapping information according to the statistical analysis result, so as to improve integrity of the compressed configuration data of the packet header field stored in the remote packet header mapping information. Moreover, after the remote packet header mapping information is updated, updated data is actively pushed to the transmitter and the receiver, so as to trigger local data update of the transmitter and the receiver. In this way, data of the transmitter and data of the receiver are maintained by using the unified data configuration center, and consistency of data of the transmitter and data of the receiver can be ensured more effectively.

All or some operations of the methods in the foregoing embodiments may be implemented by using instructions, or implemented through instructions controlling relevant hardware, and the instructions may be stored in a computer-readable memory and loaded and executed by a processor.

Therefore, an embodiment of the present disclosure provides a computer-readable storage medium, having a plurality of instructions stored therein. The instructions can be loaded by the processor, to perform the operations of any data packet processing method provided in the embodiments of this application. For example, the instructions may perform the following operations:
acquiring to-be-transmitted data packet and local packet header mapping information, the data packet including header and payload, and the packet header mapping information including a mapping relationship between a preset packet header field and preset index information; parsing the header in the data packet, to obtain a packet header field of the data packet; querying the local packet header mapping information for index information mapped by the packet header field; pulling remote packet header mapping information from a server when the index information mapped by the packet header field is not found in the local packet header mapping information, to update the local packet header mapping information based on the remote packet header mapping information; querying updated local packet header mapping information again for the index information mapped by the packet header field; and packaging the index information mapped by the packet header field and the payload when the index information mapped by the packet header field is found, to obtain compressed data packet, and transmitting the compressed data packet;
alternatively, receiving compressed data packet, the compressed data packet including header and payload; extracting the header from the compressed data packet, and detecting the header; querying, when it is detected that the header is index information obtained after packet header compression, local packet header mapping information for a packet header field mapped by the index information, the packet header mapping information including a mapping relationship between a preset packet header field and preset index information; pulling remote packet header mapping information from a server when the packet header field mapped by the index information is not found in the local packet header mapping information, to update the local packet header mapping information based on the remote packet header mapping information; querying updated local packet header mapping information again for the packet header field mapped by the index information; and storing the packet header field and payload in the compressed data packet when the packet header field mapped by the index information is found;
alternatively, acquiring header data stored in a second device, the header data including a plurality of packet header fields; determining a newly added packet header field and a non-newly added packet header field from the header data based on remote packet header mapping information, the remote packet header mapping information including a mapping relationship between a preset packet header field and preset index information; collecting statistics on occurrence frequency information of each non-newly added packet header field in the header data; updating the remote packet header mapping information based on the occurrence frequency information and the newly added packet header field; and triggering transmission of updated remote packet header mapping information to a first device and the second device, so that the first device and the second device update local packet header mapping information of the first device and the second device.

For specific implementations of the above operations, refer to the foregoing embodiments. Details are not described herein again.

The computer-readable storage medium may include: a read-only memory (ROM), a random access memory (RAM), a magnetic disk, an optical disc, or the like.

Since the instructions stored in the computer-readable storage medium may perform the operations of any data packet processing method provided in the embodiments of this application, the instructions may implement advantageous effects that may be implemented by any data packet processing method provided in the embodiments of this application. The foregoing embodiments may be referred to for details. Details are not further described herein.

According to an aspect of this application, a computer program product or a computer program is provided. The computer program product or the computer program includes computer instructions, and the computer instructions are stored in a computer-readable storage medium. A processor of an electronic device reads the computer instructions from the computer-readable storage medium, and the processor executes the computer instructions to enable the electronic device to perform the methods provided in various exemplary implementations of the above data packet processing.

To sum up, in the solutions provided in this application, the first device acquires the to-be-transmitted data packet and the local packet header mapping information, the data packet including the header and the payload, and the packet header mapping information including the mapping relationship between the preset packet header field and the preset index information. Subsequently, the first device parses the header in the data packet, to obtain the packet header field of the data packet. Next, the first device queries the local packet header mapping information for the index information mapped by the packet header field. The first device pulls the remote packet header mapping information from the server when the index information mapped by the packet header field is not found in the local packet header mapping information, to update the local packet header mapping information based on the remote packet header mapping information. Then, the first device queries the updated local packet header mapping information again for the index information mapped by the packet header field. Once the index information is found, the first device packages the index information mapped by the packet header field and the payload to obtain the compressed data packet, and transmit the compressed data packet. In this solution, based on the packet header mapping information, the packet header field is compressed by using the index information, thereby reducing the transmitted data volume. In addition, the transmitter locally has the packet header mapping information. During compression, the transmitter first queries for the index information locally, so as to improve data compression efficiency. If the index information is not found locally, the local information may be updated by pulling the remote packet header mapping information from the server, so as to compress the packet header field. The configuration update center of the packet header mapping information is deployed on the server, to help better maintain the packet header mapping information of the transmitter.

When the first device still cannot find the index information mapped by the packet header field in the updated local packet header mapping information, the first device packages the packet header field and the payload, to obtain the packaged data packet and transmit the packaged data packet. In this way, after receiving the packaged data packet, the second device parses out the packet header field for storage. Subsequently, the server can update the remote packet header mapping information by performing statistics analysis on the packet header field stored in the second device, and actively push the updated remote packet header mapping information to the first device and the second device, to update the local packet header mapping information of the first device and the second device. This solution improves a data processing procedure in a particular case, ensures normal transmission and subsequent processing of data, and ensures normal running of an entire system and consistency maintenance of data.

The second device receives the compressed data packet including the header and the payload, extracts the header from the data, and performs detection. If it is detected that the header is the index information obtained after compression, the local packet header mapping information is queried for the packet header field mapped by the index information, the packet header mapping information including the mapping relationship between the preset packet header field and the preset index information. If the packet header field is not found, the remote packet header mapping information is pulled from the server, to update the local packet header mapping information, and then the updated local packet header mapping information is queried again. When the packet header field is found, the packet header field and the payload in the compressed data packet are stored. In this solution, the header is compressed by using the index, to reduce the transmitted data volume. In a decompression process, the local packet header mapping information of the receiver is preferentially used, thereby improving decompression efficiency. When the corresponding packet header field is not found locally, the local information may be updated by pulling the remote packet header mapping information stored in the server, so as to decompress the header. The configuration update center of the packet header mapping information is deployed on the server, to help maintain the packet header mapping information of the receiver.

When detecting that the header is the uncompressed packet header field, the second device directly stores the uncompressed packet header field and the payload in the compressed data packet. This solution supplements operations of the receiver when the receiver processes the uncompressed packet header field and ensures that relevant data can be correctly stored regardless of whether the header is compressed, so that the data processing procedure is more complete and adapts to different packet transmission situations.

The server acquires the header data stored in the second device, the header data including the plurality of packet header fields. The newly added packet header field and the non-newly added packet header field are identified from the header data based on the remote packet header mapping information, the remote packet header mapping information including the mapping relationship between the preset packet header field and the preset index information. Next, statistics collection is performed on occurrence frequency information of each non-newly added packet header field in the header data, and the remote packet header mapping information is updated based on the occurrence frequency information and the newly added packet header field. Finally, transmission of the updated remote packet header mapping information to the first device and the second device is triggered, to enable the first device and the second device to update the local packet header mapping information of the first device and the second device. In this solution, the remote packet header mapping information is updated by acquiring and analyzing the header data of the second device, thereby improving integrity of packet header field compression configuration data in the remote packet header mapping information. After the remote packet header mapping information is updated, the updated remote packet header mapping information is actively pushed to the transmitter and the receiver, thereby helping maintain consistency of data of the two parties and ensure stable operation of an entire data transmission and processing system.

The operation of determining a newly added packet header field and a non-newly added packet header field in the header data specifically includes screening a newly added field name and a non-newly added field name from the header data based on the field name in the current remote packet header mapping information. The method provides a specific implementation for determining a newly added and a non-newly added packet header field, so that the header data is processed more pertinent and operational, to facilitate more accurate update of remote packet header mapping information.

A specific operation of determining a newly added packet header field and a non-newly added packet header field in the header data involves detecting, for each packet header field in the header data, whether the packet header field exists in the remote packet header mapping information; and determining as the non-newly added packet header field if the packet header field exists; or determining as the newly added packet header field if the packet header field does not exist. This manner provides another specific implementation idea for determining a newly added or non-newly added packet header field. From the perspective of whether a field exists, a field classification standard is clarified, so as to more effectively perform a subsequent update operation on the remote packet header mapping information.

It is specified that a packet header field includes a field name and a field value. During statistics collection, statistics collection is performed on the field values corresponding to the non-newly added field names in the header data, to obtain occurrence frequency information of the field values corresponding to the non-added field names. When the remote packet header mapping information is updated, the newly added field name and index information mapped by the newly added field name are first added to the remote packet header mapping information, and then the added remote packet header mapping information is updated based on occurrence frequency information of each field value corresponding to the non-newly added field name. This solution further refines specific content and operations of statistics collection and updates, and further processes the header data in depth from a level of a field name and a field value, so that the remote packet header mapping information is updated more precisely, to help improve accuracy and stability of the entire data packet processing system.

The operation of updating the added remote packet header mapping information based on occurrence frequency information of each field value corresponding to the non-newly added field name specifically involves updating, when occurrence frequency information of a field value corresponding to the non-newly added field name is greater than the first preset frequency information, the field value corresponding to the non-newly added field name to the added remote packet header mapping information; or deleting, when occurrence frequency information of a field value corresponding to the non-newly added field name is not greater than the first preset frequency information and the field value exists in the added remote packet header mapping information, the field value from the added remote packet header mapping information. This frequency-based update strategy enables dynamic adjustment of the remote header mapping information, removes uncommon field values, optimizes the content of the remote header mapping information, and enhances utilization efficiency of the remote header mapping information and the accuracy of data processing.

When the remote packet header mapping information includes the first remote mapping information and the second remote mapping information, the newly added field name and index information mapped by the newly added field name are added to the first remote mapping information. The non-newly added field name, the field value, and corresponding index information are updated to the added first remote mapping information when occurrence frequency information of a field value corresponding to the non-newly added field name is greater than the second preset frequency information (the first preset frequency information is less than the second preset frequency information); or the field value corresponding to the non-newly added field name and index information mapped by the field value are added to the second remote mapping information when the occurrence frequency information of the field value corresponding to the non-newly added field name is not greater than the second preset frequency information but is greater than the first preset frequency information. This solution further refines an update strategy of the remote packet header mapping information, and the related information is updated to different remote mapping information according to different frequency ranges, so that management of the remote packet header mapping information is more proper and efficient, to help improve compression and decompression efficiency in an entire data packet processing process.

The server receives the pull request information transmitted by the first device or the second device, where the information indicates to pull the remote packet header mapping information. Then, the server transmits, based on the pull request information, the current remote packet header mapping information to the electronic device that transmits the request, so that the electronic device updates the local packet header mapping information of the electronic device according to the information. This solution provides an active request manner for the first device and the second device to acquire the latest remote packet header mapping information, and improves system flexibility, so that the devices can acquire update information in time according to their own requirements, to ensure timeliness of the local packet header mapping information, and further perform data packet processing better.

Technical features of the foregoing embodiments may be combined in different manners to form other embodiments. To make description concise, not all possible combinations of the technical features in the foregoing embodiments are described. However, the combinations of these technical features shall be considered as falling within the scope recorded by this description provided that no conflict exists.

The foregoing embodiments describe merely several implementations of this application, and the description is specific and detailed, but they are not to be understood as a limitation to the patent scope of the disclosure. For those of ordinary skill in the art, several transformations and improvements may further be made without departing from the idea of this application. These transformations and improvements fall within the scope of protection of this application. Therefore, the protection scope of this application is subject to the claims.

## Claims

1. A data packet processing method, executable by a first device, comprising:
acquiring a first data packet and local packet header mapping information, the first data packet comprising a first header and a first payload, and the local packet header mapping information comprising a mapping relationship between a preset header field and a preset index;
parsing the first header to obtain a first header field;
querying, from the local packet header mapping information, a first index mapped to the first header field;
obtaining a second data packet by replacing the first header field in the first header with the first index.

2. The method according to claim 1, further comprising:
obtaining remote packet header mapping information from a server, when the first index is not found in the local packet header mapping information;
updating the local packet header mapping information using the remote packet header mapping information;
querying, from the updated local packet header mapping information, the first index mapped to the first header field.

3. A data packet processing method, executable by a second device, comprising:
receiving a second data packet, the second data packet comprising a second header and a first payload;
parsing the second header to obtain a first index;
obtaining local packet header mapping information comprising a mapping relationship between a preset header field and a preset index;
querying, from the local packet header mapping information, a first header field mapped by the first index;
obtaining a first data packet by replacing the first index in the second header with first header field.

4. The method according to claim 3, further comprising:
obtaining remote packet header mapping information from a server when the first header field mapped by the index information is not found in the local packet header mapping information;
updating the local packet header mapping information using the remote packet header mapping information;
querying the first header field mapped by the first index from the updated local packet header mapping information.

5. A data packet processing method, executable by a server, comprising:
acquiring header data, the header data comprising a plurality of header fields;
determining, from the header data and based on remote packet header mapping information, a first header field that is absent from the remote packet header mapping information and a second header field that is present in the remote packet header mapping information, the remote packet header mapping information comprising a mapping relationship between a preset header field and a preset index;
determining a number of occurrences of the second header field in the header data;
updating the remote packet header mapping information based on the number of occurrences of the second header field and first header field; and
transmitting the updated remote packet header mapping information to a first device and a second device.

6. The method according to claim 5, wherein the determining, from the header data and based on remote packet header mapping information, a first header field that is absent from the remote packet header mapping information and a second header field that is present in the remote packet header mapping information comprises:
identifying, from the header data and based on field names in the remote packet header mapping information, a first field name absent from the remote packet header mapping information and a second field name present in the remote packet header mapping information.

7. The method according to claim 5, wherein the determining, from the header data and based on remote packet header mapping information, a first header field that is absent from the remote packet header mapping information and a second header field that is present in the remote packet header mapping information comprises:
for each header field in the header data:
when the respective header field is present in the remote packet header mapping information, determining the respective header field as one second header field; and
when the respective header field is absent from the remote packet header mapping information, determining the respective header field as one first header field.

8. The method according to any one of claims 5 to 7, wherein each header field in the header data comprises a field name and a field value; and the determining a number of occurrences of the second header field in the header data comprises:
for a field name of the second header field, determining a number of occurrences of a respective field value in the header data;
the updating the remote packet header mapping information based on the number of occurrences of the second header field and first header field comprises:
adding the field name of the first header field and an index mapped to the field name to the remote packet header mapping information; and
updating the remote packet header mapping information based on the number of occurrences of the respective field value corresponding to the field name of the second header field.

9. The method according to claim 8, wherein the updating the remote packet header mapping information based on the number of occurrences of the respective field value corresponding to the field name of the second header field comprises:
when the number of occurrences of the respective field value is greater than a first threshold, adding the respective field value to the remote packet header mapping information; and
when the number of occurrences of the respective field value is not greater than the first threshold and the respective field value is present in the remote packet header mapping information, removing the respective field value from the remote packet header mapping information.

10. The method according to claim 9, wherein the remote packet header mapping information comprises a first remote mapping information and a second remote mapping information; and
the adding the field name of the first header field and an index mapped to the field name to the remote packet header mapping information comprises: adding the field name of the first header field and the index mapped to the field name to the first remote mapping information;
when the number of occurrences of the respective field value is greater than a first threshold, adding the respective field value to the remote packet header mapping information comprises:
when the number of occurrences of the respective field value is greater than a second threshold greater than the first threshold, adding the field name of the second header field, the respective field value, and an index mapped to the field name of the second header field to the first remote mapping information; and
when the number of occurrences of the respective field value is between the first threshold and the second threshold, adding the respective field value and index mapped to the field name of the second header field to the second remote mapping information.

11. The method according to any one of claims 5 to 10, further comprising:
receiving, from an electronic device, a request for the remote packet header mapping information, the electronic device being the first device or the second device; and
in response to the request, sending the remote packet header mapping information to the electronic device, wherein the remote packet header mapping information is used for updating local packet header mapping information in the electronic device.

12. A data packet processing apparatus, comprising:
an acquisition unit, configured to acquire a first data packet and local packet header mapping information, the first data packet comprising a first header and a first payload, and the local packet header mapping information comprising a mapping relationship between a preset header field and a preset index;
a parsing unit, configured to parse the first header to obtain a first header field;
a first query unit, configured to query, from the local packet header mapping information, a first index mapped to the first header field;
a transmission unit, configured to: obtain a second data packet by replacing the first header field in the first header with the first index.

13. A data packet processing apparatus, comprising:
a receiving unit, configured to receive a second data packet, the second data packet comprising a second header and a first payload;
an extraction unit, configured to parse the second header to obtain a first index;
a third query unit, configured to obtain local packet header mapping information comprising a mapping relationship between a preset header field and a preset index; query, from the local packet header mapping information, a first header field mapped by the first index;
a storage unit, configured to: obtain a first data packet by replacing the first index in the second header with the first header field.

14. A packet data processing apparatus, comprising:
a data acquisition unit, configured to acquire header data, the header data comprising a plurality of header fields;
a determination unit, configured to determine, from the header data and based on remote packet header mapping information, a first header field that is absent from the remote packet header mapping information and a second header field that is present in the remote packet header mapping information, the remote packet header mapping information comprising a mapping relationship between a preset header field and a preset index;
a statistics collection unit, configured to determine a number of occurrences of the second header field in the header data;
a first update unit, configured to update the remote packet header mapping information based on the number of occurrences of the second header field and first header field; and
a second update unit, configured to transmit the updated remote packet header mapping information to a first device and a second device.

15. An electronic device, comprising a memory and a processor, the memory storing an application program, and the processor being configured to run the application program in the memory, to perform the operations in the data packet processing method according to any one of claims 1 to 11.

16. A computer-readable storage medium, the computer-readable storage medium having a plurality of instructions stored therein, the instructions being suitable for being loaded by a processor, to perform the operations in the data packet processing method according to any one of claims 1 to 11.

17. A computer program product, comprising a computer program or instructions, the computer program or the instructions, when executed by a processor, implementing the operations in the packet data processing method according to any one of claims 1 to 11.
